# EUROPEAN PATENT APPLICATION

(11) **EP 4 807 738 A1**
(43) Date of publication of application: **16.09.2026**
(21) Application number: 24902303.7
(22) Date of filing: 27.09.2024
(51) Int. Cl.: G11B 5/48

(54) **MAGNETIC HEAD, MAGNETIC TAPE DRIVE, AND MAGNETIC TAPE STORAGE RACK**

(30) Priority: 15.12.2023 CN 202311733774
(71) Applicant: Huawei Technologies Co., Ltd., Shenzhen, Guangdong 518129 (CN)
(72) Inventor: HE, Jiaqi, Shenzhen, Guangdong 518129 (CN); TANG, Kun, Shenzhen, Guangdong 518129 (CN); QU, Fengguang, Shenzhen, Guangdong 518129 (CN)
(74) Representative: Isarpatent
(86) International application number: PCT/CN2024/121960
(87) International publication number: WO 2025/123877

(57) **Abstract**

The present disclosure provides a magnetic head, a tape drive, and a magnetic tape storage rack, relating to the field of tape storage technologies. The magnetic head includes a plurality of read-write areas, the plurality of read-write areas are arranged in a height direction of the magnetic head, and they are spaced apart from each other. Each of the plurality of read-write areas includes a write area and a read area that are arranged in a width direction of the magnetic head, the write area includes a write head for writing data to a magnetic tape, and the read area includes a read head for reading data from the magnetic tape. When data access needs to be performed on a target data band of the magnetic tape, a read-write area closest to the target data band performs data access on the target data band. The magnetic head can reduce a thickness of the tape drive, allow a greater quantity of tape drives to be arranged in the rack, and improve a tape storage density of the rack. The magnetic head can also save materials for manufacturing the magnetic head, and reduce manufacturing costs of the magnetic head.

## Description

The present disclosure claims priority to Chinese Patent Application No. 202311733774.0, filed on December 15, 2023 and entitled "MAGNETIC HEAD, TAPE DRIVE, AND MAGNETIC TAPE STORAGE RACK", which is incorporated herein by reference in its entirety.

### TECHNICAL FIELD

The present disclosure relates to the field of tape storage technologies, and in particular, to a magnetic head, a tape drive, and a magnetic tape storage rack.

### BACKGROUND

Magnetic tape storage is a storage technology that uses a magnetic tape as a storage medium, and is still widely used due to its low costs and low energy consumption. In magnetic tape storage, data is mainly stored on the magnetic tape by a tape drive, or data stored on the magnetic tape is read by a tape drive.

The tape drive mainly includes a magnetic head and a tape driving mechanism. The magnetic tape passes around the magnetic head, and the tape driving mechanism drives the magnetic tape to move relative to the magnetic head. During movement of the magnetic tape, the magnetic head accesses data (for example, writes data or reads data) on the magnetic tape according to a magnetic principle.

For example, the magnetic tape is typically divided into four data bands (data bands) in a width direction, which are denoted as a data band 0, a data band 1, a data band 2, and a data band 3. The magnetic head moves in the width direction of the magnetic tape, to access data on the four data bands of the magnetic tape. For example, when data on the data band 0 of the magnetic tape needs to be accessed, the magnetic head moves to a position at which a read-write area of the magnetic head is aligned with the data band 0 of the magnetic tape. When data on the data band 1 of the magnetic tape needs to be accessed, the magnetic head moves to a position at which the read-write area of the magnetic head is aligned with the data band 1 of the magnetic tape.

To prevent edges of the magnetic head from scratching the magnetic tape, a sum of a height of the magnetic head itself and a vertical travel distance of the magnetic head is generally greater than a width of the magnetic tape. In other words, no matter where the magnetic head moves, the magnetic tape is located between the two edges of the magnetic head, and a specific distance is maintained between the magnetic tape and the edges. Therefore, due to the limitations of the height of the magnetic head and the travel distance of the magnetic head, the tape drive has a relatively large thickness and occupies a relatively large space in a magnetic tape storage rack.

### SUMMARY

The present disclosure provides a magnetic head, a tape drive, and a magnetic tape storage rack. The magnetic head can reduce a thickness of the tape drive, allow a greater quantity of tape drives to be arranged in the rack, and improve a tape storage density of the rack. The magnetic head can also save materials for manufacturing the magnetic head, and reduce manufacturing costs of the magnetic head.

According to a first aspect, a magnetic head is provided. The magnetic head includes a plurality of read-write areas, the plurality of read-write areas are arranged in a height direction of the magnetic head, and the plurality of read-write areas are spaced apart from each other.

Each of the plurality of read-write areas includes a write area and a read area that are arranged in a width direction of the magnetic head, the write area includes a write head for writing data to a magnetic tape, and the read area includes a read head for reading data from the magnetic tape.

When data access needs to be performed on a target data band of the magnetic tape, a read-write area closest to the target data band performs data access on the target data band.

There is the spacing between the plurality of read-write areas. For example, two adjacent read-write areas are spaced apart from each other. The spacing may match a spacing between two adjacent data bands of the magnetic tape, or the spacing may match a width of one or more data bands.

In the solution shown in the present disclosure, the magnetic head includes the plurality of read-write areas. When data of a data band (denoted as a target data band) on the magnetic tape needs to be read, a motor may be used to drive a read-write area closest to the target data band to be above the target data band. In comparison with a conventional solution in which there is only a single read-write area, and to read the data of the target data band, the unique read-write area has to be moved to be above the target data band, to read/write the data of the target data band, the magnetic head shown in the present disclosure can be used to reduce a travel distance of the magnetic head in the height direction of the magnetic head.

After the travel distance of the magnetic head is reduced, a height of the magnetic head can also be shortened. A thickness of a tape drive is positively correlated with the travel distance of the magnetic head and the height of the magnetic head. Therefore, once the travel distance of the magnetic head is reduced and the height of the magnetic head is shortened, a tape drive in which the magnetic head is located can be thinned. Once the tape drive is thinned, more tape drives can be arranged in a rack of a magnetic tape storage rack, thereby improving a tape storage density of the magnetic tape storage rack.

In the solution shown in the present disclosure, because the height of the magnetic head is shortened, in comparison with a magnetic head in the conventional solution, more heads are manufactured on a wafer (wafer) with a same area, thereby reducing processing and manufacturing costs of the magnetic head.

In an implementation solution of the present disclosure, each read-write area includes one write area and one read area. In another implementation solution of the present disclosure, a quantity of write areas and a quantity of read areas that are included in each read-write area are not limited. The read area is a continuous area, and is not divided by the write area. The write area is a continuous area, and is not divided by the read area.

In a possible implementation, each of the plurality of read-write areas includes one write area and one read area, the plurality of read-write areas include a first-type read-write area and a second-type read-write area, and an arrangement sequence of a write area and a read area in the first-type read-write area is opposite to an arrangement sequence of a write area and a read area in the second-type read-write area.

In a tape storage technology, it is usually required that the magnetic head can access data (for example, write data) on the magnetic tape when the magnetic tape moves in a forward direction, and the magnetic head can also access data (for example, write data) on the magnetic tape when the magnetic tape moves in a reverse direction. That the magnetic tape moves in a forward direction may be that the magnetic tape moves right relative to the magnetic head, and that the magnetic tape moves in a reverse direction may be that the magnetic tape moves left relative to the magnetic head.

After data is written based on the write area, the read area needs to check whether the written data is correct.

Therefore, in the solution in which each read-write area includes one write area and one read area, the plurality of read-write areas may include the first-type read-write area and the second-type read-write area, and an arrangement manner of the write area and the read area in the first-type read-write area is opposite to an arrangement manner of the write area and the read area in the second-type read-write area.

For example, the first-type read-write area is a read-write area in which the arrangement manner is: write area-read area (the write area is on the left, and the read area is on the right), and the second-type read-write area is a read-write area in which the arrangement manner is: read area-write area (the write area is on the right, and the read area is on the left).

In this way, when data needs to be written, and when the magnetic tape moves right relative to the magnetic head, the write area in the first-type read-write area writes data, and the read area in the first-type read-write area checks the written data. When the magnetic tape moves left relative to the magnetic head, although the first-type read-write area cannot complete data access, the write area in the second-type read-write area can write data, and the read area in the second-type read-write area checks the written data to complete data access.

Therefore, in the solution shown in the present disclosure, although each read-write area includes only one write area and one read area, because the plurality of read-write areas include the first-type read-write area (when the magnetic tape moves in a first direction, the first-type read-write area can write data to the magnetic tape) and the second-type read-write area (when the magnetic tape moves in a second direction, the second-type read-write area can write data to the magnetic tape), the following can still be implemented: No matter whether the magnetic tape moves in a forward or reverse direction, the magnetic head can perform data access on the magnetic tape. The data access herein is data writing, but the data access may alternatively be data reading.

However, in the conventional solution, the magnetic head has only one read-write area. To implement that the unique read-write area can access data (for example, write data) during both forward and backward rotation of the magnetic tape, the read-write area has to be: write area-read area-write area, or has to be: read area-write area-read area.

In a possible implementation, the magnetic head is configured to: when the magnetic tape moves in the first direction, perform data access on a data band of the magnetic tape via the first-type read-write area; and
when the magnetic tape moves in the second direction, perform data access on another data band of the data band via the second-type read-write area, where the first direction is opposite to the second direction.

In the solution shown in the present disclosure, because the first-type read-write area and the second-type read-write area respectively correspond to different data bands, when the magnetic tape moves in a forward direction, the first-type read-write area performs data access on one of the data bands, and when the magnetic tape moves in a reverse direction, the second-type read-write area performs data access on the other data band.

It can be learned that, in the solution shown in the present disclosure, during forward and backward rotation of the magnetic tape, the magnetic head accesses data on two different data bands of the magnetic tape via two different read-write areas. However, in the conventional solution, during forward and backward rotation of the magnetic tape, the magnetic head accesses data on a same data band of the magnetic tape via a unique read-write area.

In a possible implementation, the magnetic head includes two first magnetic stripes, each first magnetic stripe includes m write areas and m read areas that are distributed in a height direction, and m is an integer greater than or equal to 1.

The two first magnetic stripes are spliced in a width direction, m write areas of one first magnetic stripe and m read areas of the other first magnetic stripe form m first-type read-write areas, and m read areas of the one first magnetic stripe and m write areas of the other first magnetic stripe form m second-type read-write areas.

In this arrangement manner, the first-type read-write area is horizontally arranged in a sequence: write area-read area; and the second-type read-write area is horizontally arranged in a sequence: read area-write area, which is opposite to the first-type read-write area. This means that when the magnetic head includes vertical magnetic stripes (for example, is formed by bonding with glue), up-down arrangement sequences of different magnetic stripes are symmetrical. For example, two magnetic stripes (that is, two first magnetic stripes) form one head, and each magnetic stripe includes only one read area and one write area (that is, m=1 is used as an example). In a vertical direction, if a write area is above a read area in a 1^{st} magnetic stripe, a read area is above a write area in a 2^{nd} magnetic stripe. After the two magnetic stripes are bonded, the write area of the 1^{st} magnetic stripe and the read area of the 2^{nd} magnetic stripe form a first-type read-write area, and the write area of the 2^{nd} magnetic stripe and the read area of the 1^{st} magnetic stripe form a second-type read-write area.

It can be learned that actually, a structure of the 1^{st} magnetic stripe is completely the same as that of the 2^{nd} magnetic stripe, and the 1^{st} magnetic stripe becomes the 2^{nd} magnetic stripe when rotated by 180 degrees around the center of the 1^{st} magnetic. Both the 1^{st} magnetic stripe and the 2^{nd} magnetic stripe are the foregoing first magnetic stripes. Therefore, one of the first magnetic stripes becomes the other first magnetic stripe when rotated by 180 degrees around the center of the first magnetic stripe. Therefore, a magnetic head manufacturer only needs to produce magnetic stripes of one specification, and this simplifies a process in comparison with a solution in which magnetic stripes of different specifications are produced to form a magnetic head. The foregoing uses an example in which each of the two magnetic stripes includes only one read area and one write area for description. If the magnetic head includes more than two read-write areas (for example, includes two first-type read-write areas and two second-type read-write areas), magnetic stripes forming the magnetic head also comply with this symmetry rule, and this also has an effect of simplifying a process. On the contrary, in a conventional technology, a plurality of magnetic stripes forming the magnetic head are different. Therefore, the magnetic head manufacturer has to generate magnetic stripes of a plurality of specifications.

Because the magnetic stripe is usually processed on a wafer (wafer), in the solution in which the magnetic head includes two first magnetic stripes, the magnetic head manufacturer needs to process only one type of wafer. In comparison with a solution in which two types of wafers are processed to manufacture two types of magnetic stripes, one type of wafer is removed, thereby further reducing processing and manufacturing costs of the magnetic head.

In a possible implementation, the magnetic head includes a second magnetic stripe and a third magnetic stripe, the second magnetic stripe includes a write areas and b read areas, the third magnetic stripe includes a read areas and b write areas, and both a and b are integers greater than or equal to 1.

An arrangement manner of the a write areas of the second magnetic stripe is the same as an arrangement manner of the a read areas of the third magnetic stripe, and an arrangement manner of the b read areas of the second magnetic stripe is the same as an arrangement manner of the b write areas of the third magnetic stripe.

The second magnetic stripe and the third magnetic stripe are spliced in a width direction, the a write areas of the second magnetic stripe and the a read areas of the third magnetic stripe are spliced to form a first-type read-write areas, and the b read areas of the second magnetic stripe and the b write areas of the third magnetic stripe are spliced to form b second-type read-write areas.

In the solution shown in the present disclosure, each of the plurality of read-write areas horizontally includes one write area and one read area. For example, the first-type read-write area may be a read-write area arranged horizontally in a sequence: write area-read area, and the second-type read-write area may be a read-write area arranged horizontally in a sequence: read area-write area. Therefore, any read-write area horizontally includes only two "areas", and one horizontal "area" occupies one magnetic stripe. Therefore, the magnetic head shown in the present disclosure can be formed by horizontally splicing only two magnetic stripes (that is, the second magnetic stripe and the third magnetic stripe).

However, in the conventional solution, because a unique read-write area has to be: write area-read area-write area, or has to be: read area-write area-read area, the unique read-write area has to horizontally include three "areas", and one horizontal "area" occupies one magnetic stripe. Therefore, three magnetic stripes need to be spliced to form the magnetic head in the conventional solution.

It can be learned that, in the solution shown in the present disclosure, in comparison with the conventional solution, one magnetic stripe is removed, thereby saving materials for manufacturing the magnetic head, and reducing processing and manufacturing costs of the magnetic head.

It should be noted that, to form, by horizontally splicing two magnetic stripes, namely, the second magnetic stripe and the third magnetic stripe, the magnetic head including the first-type read-write area and the second-type read-write area, the second magnetic stripe and the third magnetic stripe need to meet the following condition.

The arrangement manner of the a write areas of the second magnetic stripe is the same as the arrangement manner of the a read areas of the third magnetic stripe, and the arrangement manner of the b read areas of the second magnetic stripe is the same as the arrangement manner of the b write areas of the third magnetic stripe.

In this way, the magnetic head including the a first-type read-write areas and the b second-type read-write areas can be formed only by horizontally splicing the second magnetic stripe and the third magnetic stripe.

It should be noted that a and b may be equal or may not be equal.

In a possible implementation, each read-write area includes a plurality of access heads, the access head is a write head or a read head, and k access heads in different read-write areas are connected through a common analog switch to a circuit of a tape drive in which the k access heads are located.

The analog switch is configured to: connect a circuit in which a part of the k access heads are located, and disconnect a circuit in which a remaining part of the access heads are located, where k is greater than or equal to 2, and is less than or equal to a quantity of the read-write areas.

In the solution shown in the present disclosure, the k access heads in the different read-write areas may be connected to the circuit of the tape drive through the common analog switch. For example, the analog switch includes k output terminals and one input terminal. In this case, the k access heads are all connected one-to-one to the k output terminals of the analog switch through signal cables, and the input terminal of the analog switch is connected to the circuit of the tape drive.

For example, k is 2, the analog switch is a single-pole double-throw switch, the analog switch includes two output terminals and one input terminal, two access heads in different read-write areas are respectively connected to the two output terminals of the analog switch through signal cables, and the input terminal of the analog switch is connected to the circuit of the tape drive. For example, the input terminal of the analog switch is connected to a flexible printed circuit through a signal cable. Therefore, the two access heads originally need two signal cables to be connected to the circuit. However, through the analog switch, the two access heads can be connected to the circuit through only one signal cable.

It can be learned that an analog switch can combine k signal cables into one signal cable for connection to the circuit of the tape drive. In comparison with not using the analog switch, k-1 signal cables are removed. In this way, in the solution shown in the present disclosure, a quantity of outgoing leads of the magnetic head can be controlled not to be excessive, so that the quantity of outgoing leads of the magnetic head is within a controllable range.

In a possible implementation, two adjacent read-write areas are spaced apart from each other, and the spacing matches a width of one or more data bands of the magnetic tape.

In the solution shown in the present disclosure, an excessively large quantity of read-write areas may lead to a large quantity of outgoing leads of the magnetic head, and an excessively small quantity of read-write areas cause a large travel distance of the magnetic head. Therefore, although the magnetic head shown in the present disclosure includes the plurality of read-write areas, two adjacent read-write areas are spaced apart from each other, and the spacing is a width of one data band or a width of a plurality of data bands. In this way, neither a quantity of read-write areas nor a travel distance of the magnetic head is excessive, where both the quantity of read-write areas and the travel distance of the magnetic head are considered.

In a possible implementation, there are two read-write areas.

If the magnetic tape has 2n data bands, the spacing matches a width of (n-1) data bands of the magnetic tape.

If the magnetic tape has (2n-1) data bands, the spacing matches a width of (n-2) or (n-1) data bands of the magnetic tape, where n is an integer greater than or equal to 2.

In the solution shown in the present disclosure, an arrangement manner of the two read-write areas on the magnetic head is related to a quantity of data bands of the magnetic tape.

If the quantity of data bands is an even number, the spacing between the two read-write areas is the width of (n-1) data bands. In this way, n data bands in the 2n data bands are close to one of the read-write areas (denoted as a 1^{st} read-write area), and it is appropriate for the 1^{st} read-write area to access the n data bands. The other n data bands are close to the other read-write area (denoted as a 2^{nd} read-write area), and it is appropriate for the 2^{nd} read-write area to access the other n data bands. Therefore, in the two read-write areas, the 1^{st} read-write area is responsible for performing data access on half of the data bands, and the half of the data bands are all data bands that are close to the 1^{st} read-write area. The 2^{nd} read-write area is responsible for performing data access on the other half of the data bands, and the other half of the data bands are all data bands that are close to the 2^{nd} read-write area.

If the quantity of data bands is an odd number, the spacing between the two read-write areas is the width of (n-2) or (n-1) data bands. In this way, n data bands in the (2n-1) data bands are close to one of the read-write areas (denoted as a 1^{st} read-write area), and it is appropriate for the 1^{st} read-write area to access the n data bands. The other (n-1) data bands are close to the other read-write area (denoted as a 2^{nd} read-write area), and it is appropriate for the 2^{nd} read-write area to access the other (n-1) data bands. Therefore, in the two read-write areas, the 1^{st} read-write area is responsible for performing data access on the n data bands, and the n data bands are all data bands that are close to the 1^{st} read-write area. The 2^{nd} read-write area is responsible for performing data access on the remaining (n-1) data bands, and the (n-1) data bands are all data bands that are close to the 2^{nd} read-write area.

For example, there are five data bands, and the two read-write areas may be separated by a width of one data band or a width of two data bands. In this way, in the five data bands, two data bands are close to the 1^{st} read-write area, and it is appropriate for the 1^{st} read-write area to access the two data bands; and the other three data bands are close to the 2^{nd} read-write area, and it is appropriate for the 2^{nd} read-write area to access the other three data bands. Therefore, the 1^{st} read-write area is responsible for performing data access on the two nearby data bands, and the 2^{nd} read-write area is responsible for performing data access on the three nearby data bands.

In the solution shown in the present disclosure, there are two read-write areas. In comparison with the conventional solution in which there is one read-write area, the quantity of read-write areas does not excessively increase, and therefore, the quantity of outgoing leads of the magnetic head does not greatly increase. Therefore, the quantity of outgoing leads of the magnetic head shown in the present disclosure is still within the controllable range. There are two read-write areas. In comparison with the conventional solution in which there is one read-write area, when the magnetic tape is accessed according to the foregoing closest access principle, the travel distance of the magnetic head can be reduced, so that the height of the magnetic head is shortened, thereby finally thinning the tape drive.

According to a second aspect, a tape drive is provided. The tape drive includes the magnetic head according to the first aspect, and further includes a motor that drives the magnetic head to move.

In the solution shown in the present disclosure, when the magnetic head needs to access data on a data band (denoted as a target data band) of a magnetic tape, the motor may drive the magnetic head to move until a read-write area that is in a plurality of read-write areas and that is closest to the target data band is opposite to the target data band, and then the closest read-write area accesses the data on the target data band.

It can be learned that, in the solution including the plurality of read-write areas, during head movement, the read-write area closest to the target data band is moved to be opposite to the target data band, while in a solution including only one read-write area, during head movement, only the unique read-write area can be moved to be opposite to the target data band, regardless of a distance from the target data band. Therefore, compared with a magnetic head including only one read-write area, a magnetic head including a plurality of read-write areas can be used to reduce a travel distance of the magnetic head in a height direction of the magnetic head.

A thickness of the tape drive is positively correlated with the travel distance of the magnetic head in the height direction and a height of the magnetic head. Therefore, once the travel distance of the magnetic head is reduced and the height of the magnetic head is shortened, the tape drive can be thinned. Once the tape drive is thinned, more tape drives can be arranged in a rack of a magnetic tape storage rack, thereby improving a tape storage density of the magnetic tape storage rack.

In the solution shown in the present disclosure, the tape drive may not include the magnetic tape, but the tape drive has a tape port for inserting the magnetic tape. When data needs to be stored, an empty magnetic tape is inserted into the tape port of the tape drive. After the magnetic tape is full of data, the magnetic tape is taken out from the tape port and placed in a tape library. When the data needs to be read, the magnetic tape is taken out from the tape library and inserted into the tape drive for data reading.

In a possible implementation, the tape drive may further include the magnetic tape.

The magnetic tape is fixedly installed in the tape drive, and is a magnetic medium configured to provide data storage.

In the solution shown in the present disclosure, the solution in which the magnetic tape is fixed in the tape drive helps protect the magnetic tape from being contaminated and protect data stored in the magnetic tape from being lost.

In the solution in which the magnetic tape is fixed in the tape drive, the tape library stores the tape drive instead of the magnetic tape (the magnetic tape is integrated in the tape drive).

In the solution in which the magnetic tape is fixed in the tape drive, the magnetic tape does not need to be taken out from the tape drive. In this way, a robot arm can be removed, and more tape drives are arranged in the tape library.

According to a third aspect, a magnetic tape storage rack is provided. The magnetic tape storage rack includes a rack, a controller, and the tape drive according to the second aspect, and both the controller and the tape drive are located in the rack.

The controller is configured to: receive an access request from a user, and perform data access on a magnetic tape in the tape drive based on the access request, where the data access includes data reading and data writing.

The tape drive may be fixedly installed in the rack, or the tape drive may be located in a slot of the rack in a pluggable manner.

In the solution shown in the present disclosure, because the tape drive is thin, more tape drives may be stored in a cabinet, thereby improving a tape storage density of the cabinet.

In the solution shown in the present disclosure, the magnetic tape is fixed in the tape drive. In this solution, the magnetic tape does not need to be taken out from the tape drive. In this way, a robot arm can be removed, and more tape drives are arranged in the rack, thereby further improving the tape storage density of the cabinet.

### BRIEF DESCRIPTION OF DRAWINGS

FIG. 1 is a diagram of movement of a magnetic tape relative to a magnetic head according to an example embodiment of the present disclosure;
FIG. 2 is a diagram of accessing data on a magnetic tape by a magnetic head including one read-write area according to a conventional solution;
FIG. 3 is a diagram of accessing data on a magnetic tape by a magnetic head including a plurality of read-write areas according to an example embodiment of the present disclosure;
FIG. 4 is a diagram of accessing data on a magnetic tape by a magnetic head including a plurality of read-write areas according to an example embodiment of the present disclosure;
FIG. 5 is a diagram of accessing data on a magnetic tape by a magnetic head including a plurality of read-write areas according to an example embodiment of the present disclosure;
FIG. 6 is a diagram of accessing data on a magnetic tape by a magnetic head including a plurality of read-write areas according to an example embodiment of the present disclosure;
FIG. 7 is a diagram of accessing data on a magnetic tape by a magnetic head including a plurality of read-write areas according to an example embodiment of the present disclosure;
FIG. 8 is a diagram of a magnetic head including a plurality of read-write areas in which each read-write area includes one write area and one read area according to an example embodiment of the present disclosure;
FIG. 9 is a diagram of accessing data on a magnetic tape by a magnetic head including one read-write area that includes two write areas and one read area according to a conventional solution;
FIG. 10 is a diagram of accessing data on a magnetic tape by a magnetic head including two read-write areas that are respectively a first-type read-write area and a second-type read-write area according to an example embodiment of the present disclosure;
FIG. 11 is a diagram of accessing data on a magnetic tape by a magnetic head in which each read-write area includes two write areas and one read area according to an example embodiment of the present disclosure;
FIG. 12 is a diagram of a magnetic head connected to a circuit through an analog switch according to an example embodiment of the present disclosure;
FIG. 13 is a diagram of a magnetic head in which each read-write area includes two read areas and one write area according to an example embodiment of the present disclosure;
FIG. 14 is a diagram of a magnetic head in which one read-write area includes two write areas and one read area, and the other read-write area includes two read areas and one write area according to an example embodiment of the present disclosure; and
FIG. 15 is a diagram of a manufacturing process of splicing two first magnetic stripes to form a magnetic head according to an example embodiment of the present disclosure.

### Reference numerals:

10: Head; 20: Magnetic tape; 30: First tape reel; 40: Second tape reel
1: First magnetic stripe; 2: Second magnetic stripe; 3: Read-write area; 4: Analog switch; 5: Third magnetic stripe; 6: Fourth magnetic stripe; 7: Fifth magnetic stripe; 8: Sixth magnetic stripe; 9: Seventh magnetic stripe; 11: Eighth magnetic stripe; 12: Ninth magnetic stripe
21: First data band; 22: Second data band; 23: Third data band; 24: Fourth data band; 25: Fifth data band; 26: Sixth data band
31: Write area; 311: Write head; 32: Read area; 321: Read head

### DESCRIPTION OF EMBODIMENTS

To make the objectives, technical solutions, and advantages of the present disclosure clearer, the following further describes the implementations of the present disclosure in detail with reference to the accompanying drawings.

Embodiments relate to a magnetic head of a tape drive, where the tape drive may be, but is not limited to, a linear tape open (linear tape open, LTO) tape drive.

For ease of understanding, nouns in embodiments are first described.

A magnetic tape (magnetic tape) is a strip-shaped magnetic medium that carries a magnetic layer, and is configured to record sound, image, digital, or other signals. The magnetic tape is usually divided into a plurality of data bands (data bands) in a width direction of the magnetic tape. A magnetic tape corresponding to the current LTO tape drive is usually a magnetic tape with a width of 12.7 mm, and is divided into four data bands in a width direction.

A magnetic head (head) is a component that writes (that is, records) data on a magnetic medium (for example, a magnetic tape) and reads data recorded on the magnetic medium according to a magnetic principle.

The magnetic head includes a read-write area (read-write area). The read-write area is an area used to access data on a magnetic medium, and the data access includes data writing or data reading.

The read-write area is further divided into a write area (write area) and a read area (read area). The write area is an area in which a plurality of write heads (write heads) are distributed, and the read area is an area in which a plurality of read heads (read heads) are distributed.

The write head is a component on the magnetic head, and changes a magnetic field of a magnetic material on a magnetic medium (for example, a magnetic tape) through magnetization to record data on the magnetic medium.

The read head is a component on the magnetic head, and reads data recorded on a magnetic medium (for example, a magnetic tape) by sensing a magnetic field of a magnetic material on the magnetic medium.

The following describes a structure and a principle for tape storage on a tape drive.

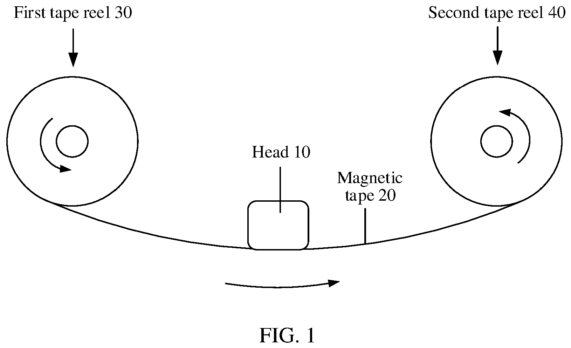

FIG. 1 is a schematic top view of a tape drive. The tape drive includes a magnetic head 10 and a tape driving mechanism. The tape driving mechanism includes a first tape reel 30 and a second tape reel 40. One end of a magnetic tape 20 is wound around the first tape reel 30, and the other end is wound around the second tape reel 40. The magnetic tape 20 passes around the magnetic head 10 and touches the magnetic head 10. The magnetic tape 20 moves relative to the magnetic head 10 when the first tape reel 30 and the second tape reel 40 rotate. For example, as shown in FIG. 1, the first tape reel 30 and the second tape reel 40 rotate counterclockwise, and the magnetic tape 20 moves right relative to the magnetic head 10.

When the magnetic tape 20 moves relative to the magnetic head 10, the magnetic head 10 accesses data on the magnetic tape 20.

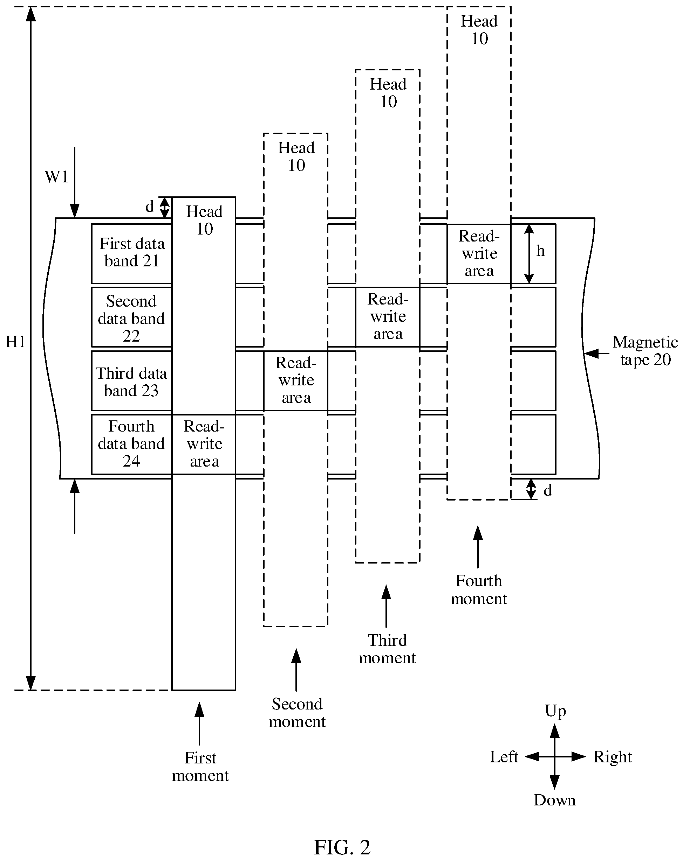

FIG. 2 is a diagram of a scenario in which the magnetic head 10 accesses data on the magnetic tape 20 according to a conventional solution. As shown in FIG. 2, the magnetic tape 20 has a specific width, for example, the width is denoted as W1.

Still refer to FIG. 2. The magnetic tape 20 is divided into a plurality of data bands in a width direction. For example, as shown in FIG. 2, the magnetic tape 20 has four data bands, which are respectively denoted as a first data band 21, a second data band 22, a third data band 23, and a fourth data band 24.

Still refer to FIG. 2. The magnetic head 10 has a read-write area, and the magnetic head 10 moves up and down in the width direction of the magnetic tape 20, to access data on each data band of the magnetic tape 20.

For example, as shown in FIG. 2, when needing to access data on the first data band 21, the magnetic head 10 needs to move until the read-write area of the magnetic head 10 is opposite to the first data band 21 of the magnetic tape 20 (refer to a location of the magnetic head 10 at a fourth moment shown in FIG. 2), and then the magnetic tape 20 moves left and right relative to the magnetic head 10, to perform full writing or reading on the first data band 21 of the magnetic tape 20.

When needing to access data on the second data band 22, the magnetic head 10 needs to move until the read-write area of the magnetic head 10 is opposite to the second data band 22 of the magnetic tape 20 (refer to a location of the magnetic head 10 at a third moment shown in FIG. 2), and then the magnetic tape 20 moves left and right relative to the magnetic head 10, to perform full writing or reading on the second data band 22 of the magnetic tape 20.

When needing to access data on the third data band 23, the magnetic head 10 needs to move until the read-write area of the magnetic head 10 is opposite to the third data band 23 of the magnetic tape 20 (refer to a location of the magnetic head 10 at a second moment shown in FIG. 2), and then the magnetic tape 20 moves left and right relative to the magnetic head 10, to perform full writing or reading on the third data band 23 of the magnetic tape 20.

When needing to access data on the fourth data band 24, the magnetic head 10 needs to move until the read-write area of the magnetic head 10 is opposite to the fourth data band 24 of the magnetic tape 20 (refer to a location of the magnetic head 10 at a first moment shown in FIG. 2), and then the magnetic tape 20 moves left and right relative to the magnetic head 10, to perform full writing or reading on the fourth data band 24 of the magnetic tape 20.

In this way, the magnetic head 10 moves up and down relative to the magnetic tape 20, and the magnetic tape 20 moves left and right relative to the magnetic head 10, to perform full writing or reading on the entire magnetic tape 20.

It should be noted that, in FIG. 2, the magnetic head 10 only moves up and down in the width direction of the magnetic tape, and does not move left and right in a length direction of the magnetic tape 20. FIG. 2 is merely for ease of distinguishing between and viewing locations at which the magnetic head 10 stays at different moments.

The magnetic tape 20 moves across the magnetic head 10, and the magnetic head 10 touches the magnetic tape 20. Therefore, to avoid scratching the magnetic tape 20 at an edge location of the magnetic head 10, as shown in FIG. 2, no matter where the magnetic head 10 moves, an end of the magnetic head 10 in a height direction always extends out of an edge of the magnetic tape 20 in the width direction, where the height direction of the magnetic head 10 is consistent with the width direction of the magnetic tape 20.

For example, when the magnetic head 10 moves until an upper end is closest to an upper edge of the magnetic tape 20, as shown in FIG. 2, when the magnetic head 10 moves until the read-write area of the magnetic head 10 is opposite to the fourth data band 24, a length of the upper end of the magnetic head 10 extending out of the upper edge of the magnetic tape 20 is d. When the magnetic head 10 moves until a lower end is closest to a lower edge of the magnetic tape 20, as shown in FIG. 2, when the magnetic head 10 moves until the read-write area of the magnetic head 10 is opposite to the first data band 21, a length of the lower end of the magnetic head 10 extending out of the lower edge of the magnetic tape 20 is d.

Therefore, to ensure that the upper and lower ends of the magnetic head 10 always extend out of the upper and lower edges of the magnetic tape 20, as shown in FIG. 2, a height of the magnetic head 10 is large. In addition, the magnetic head 10 needs to move up and down in a tape drive. Therefore, sufficient space is needed in the tape drive for the magnetic head 10 to move up and down.

Still refer to FIG. 2. In the tape drive, a sum of the height of the magnetic head 10 and an up and down travel distance of the magnetic head (which may be denoted as a magnetic head stroke height) is at least H1. Refer to FIG. 2. H1 = W1 + 6h + 2d, where h is a height of a read-write area 3 and is approximately a width of a single data band.

However, when the magnetic head 10 shown in FIG. 2 accesses the data on the magnetic tape 20, at least the following problems exist.

First, the magnetic head stroke height H1 is large. As a result, the tape drive is thick.

For example, the width W1 of the magnetic tape 20 is approximately 12.7 mm, and a width of each data band is approximately 3 mm. In this case, the height of the magnetic head 10 needs to be approximately 27 mm, a stroke height of the magnetic head 10 in the tape drive is approximately 9 mm, and the magnetic head stroke height H1 of the magnetic head 10 is approximately 36 mm. In addition, a thickness of upper and lower shells of the tape drive is 2x2 mm. In this case, a thickness of the tape drive is at least greater than 40 mm.

Second, although the tape drive is thick, the magnetic tape in the tape drive occupies a small proportion of space, resulting in a small storage capacity density of the tape drive.

For example, in a tape drive with a thickness of 40 mm, a width of a magnetic tape is only 12.7 mm, and a storage capacity density of the tape drive is less than 31.75%. The storage capacity density may also be referred to as a tape storage density, and is a ratio of a width of the magnetic tape (that is, a thickness of the magnetic tape) to the thickness of the tape drive.

Embodiments provide a magnetic head, where a travel distance of the magnetic head 10 is small, so that a height of the magnetic head 10 can be shortened. Once the stroke of the magnetic head 10 is small, and the height of the magnetic head is small, a magnetic head stroke height can be reduced, so that a tape drive is thinned. When the tape drive is thinned, and a width of a magnetic tape remains unchanged, a storage capacity density of the tape drive is increased. In addition, if the tape drive is thinned, a cabinet used to store the tape drive can accommodate more tape drives.

In addition, the magnetic head 10 shown in embodiments needs to be formed by splicing only two magnetic stripes. In comparison with a conventional head formed by splicing three magnetic stripes, one magnetic stripe is removed, thereby reducing material costs of the magnetic head 10, and further reducing processing and manufacturing costs of the magnetic head. In addition, because the height of the magnetic head is shortened, heights of the magnetic stripes spliced to form the magnetic head are also shortened. Therefore, more magnetic stripes are manufactured on a wafer (wafer) with a same area, thereby further reducing processing and manufacturing costs of the magnetic head 10.

In addition, in comparison with a magnetic head including more read-write areas, two magnetic stripes used for a magnetic head including two read-write areas are a same magnetic stripe having a same structure and material. In this case, only one type of wafer needs to be manufactured during magnetic stripe processing, thereby further reducing processing and manufacturing costs of the magnetic head 10.

The following describes features of the magnetic head shown in embodiments.

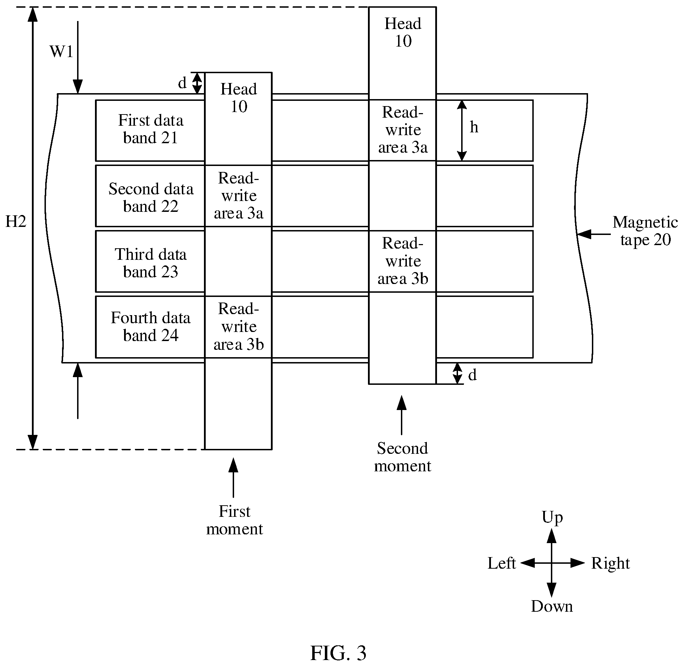

In the descriptions of embodiments, there are orientation nouns: up and down, and left and right. Therefore, refer to FIG. 3. A width direction of the magnetic tape 20 may be an up and down direction, a direction perpendicular to the width direction may be a left and right direction, and moving of the magnetic tape 20 means moving left or right.

A height direction of the magnetic head 10 is the same as the width direction of the magnetic tape 20, and both are up and down directions. A width direction of the magnetic head 10 is the same as a length direction of the magnetic tape 20, and both are left and right directions.

Refer to FIG. 3. The magnetic head 10 includes a plurality of read-write areas 3, the plurality of read-write areas 3 are arranged in the height direction of the magnetic head 10, and two adjacent read-write areas 3 are spaced apart from each other. In FIG. 3, two read-write areas 3 are used as an example, and the two read-write areas 3 are respectively denoted as a read-write area 3a and a read-write area 3b for differentiation.

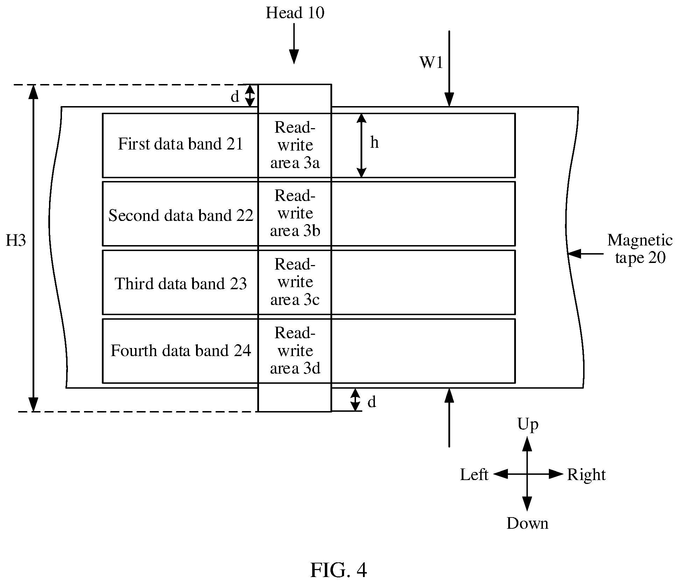

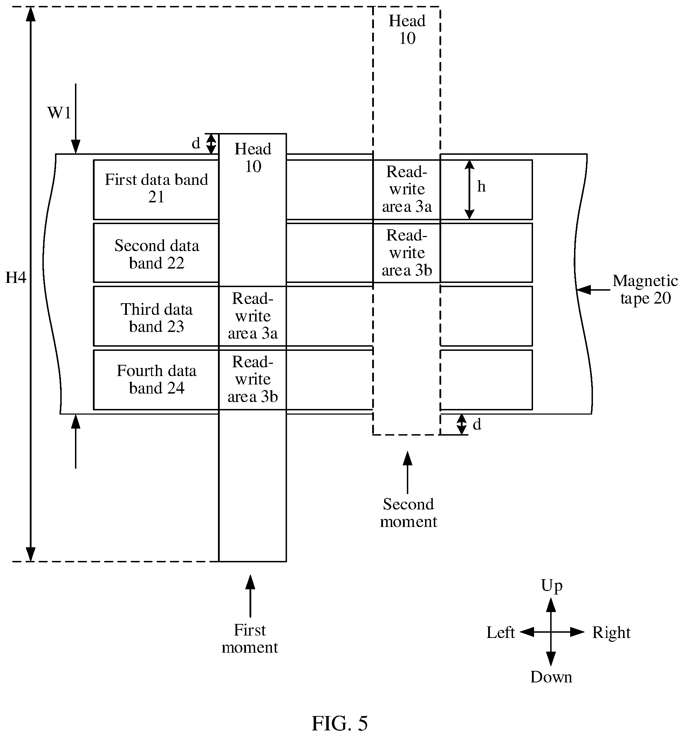

The spacing may match a spacing between two adjacent data bands of the magnetic tape (refer to FIG. 4 and FIG. 5), or the spacing may match a width of one or more data bands of the magnetic tape (refer to FIG. 3).

Because the magnetic head 10 includes the plurality of read-write areas 3 in the height direction, the plurality of read-write areas 3 may access data on a plurality of data bands of the magnetic tape according to the following closest access principle.

When needing to access data on a data band (denoted as a target data band), if a read-write area (denoted as a target read-write area) opposite to the target data band exists in the plurality of read-write areas 3, the magnetic head does not need to move. However, if no read-write area opposite to the target data band exists in the plurality of read-write areas, the magnetic head needs to move, and the magnetic head needs to move only until a read-write area closest to the target data band is directly opposite to the target data band and becomes a target read-write area. After the target read-write area is opposite to the target data band, the target read-write area may perform data access on the target data band.

That the data band is opposite to the read-write area may also be referred to as that the read-write area is located above the data band, and an orthographic projection of the read-write area on the magnetic tape covers the data band.

It should be noted that, in embodiments, "closest" is a basic principle, but a case in which the "closest" principle is violated in some cases is not excluded. For example, when two read-write areas are close to the target band, any one of the two read-write areas may be selected to access the target data band. When the read-write area closest to the target band cannot access the target band due to a structure or another limitation, a farther read-write area accesses the target band. When the read-write area closest to the target band is faulty, a farther read-write area accesses the target band. Therefore, provided that access logic for a magnetic head of a tape drive to a band complies with the "closest" principle in most cases, this falls within the scope of embodiments.

It can be learned that, comparison between a magnetic head including a plurality of read-write areas in embodiments and a magnetic head including only one read-write area shows that, when a magnetic tape with a same width is accessed, for example, a magnetic tape including four data bands is accessed, a travel distance of the magnetic head in a case that the plurality of read-write areas access data on the four data bands according to the foregoing closest principle is less than a travel distance of the magnetic head in a case that the one read-write area accesses data on the four data bands.

Therefore, because the magnetic head in embodiments includes the plurality of read-write areas, an up and down travel distance of the magnetic head 10 can be reduced. Once the travel distance of the magnetic head 10 is reduced, a height of the magnetic head 10 can be shortened, and then a magnetic head stroke height can be reduced (the magnetic head stroke height is a sum of the travel distance of the magnetic head and the height of the magnetic head).

For example, refer to FIG. 3. The magnetic head stroke height is H2, and H2 = W1 + 2h + 2d, for example, approximately 24 mm. It is clear that in comparison with the solution shown in FIG. 2, the magnetic head stroke height is reduced by 4h, for example, 12 mm, and a thickness of the tape drive may be reduced to 26 mm. In this case, a tape storage density of the tape drive is approximately 48.85%.

The following describes an arrangement manner and a quantity of the plurality of read-write areas 3.

The plurality of read-write areas 3 may be arranged in two manners. Refer to FIG. 4 and FIG. 5. In one manner, the plurality of read-write areas 3 are sequentially arranged in the height direction of the magnetic head, and a spacing between two adjacent read-write areas 3 matches a spacing between two adjacent data bands.

In the other manner, the plurality of read-write areas 3 are arranged in the height direction of the magnetic head, and a spacing between two adjacent read-write areas 3 matches a width of one or more data bands.

The following separately describes specific arrangement and a quantity of read-write areas 3 for the foregoing two arrangement manners.
(I) The plurality of read-write areas 3 are sequentially arranged in the height direction of the magnetic head, and a spacing between two adjacent read-write areas 3 matches a spacing between two adjacent data bands.

That the two spacings match means that the two spacings are equal or approximately equal. That two values in embodiments match means that the two values are equal or approximately equal, unless otherwise specified.

For example, if the spacing between the two adjacent data bands is greater than or equal to 0, and is less than a width of a single data band, the spacing between the two adjacent read-write areas 3 is also greater than or equal to 0, and is less than the width of the single data band.

In an example, if the spacing between the two adjacent data bands is 0, the spacing between the two adjacent read-write areas is also 0. In this case, the plurality of read-write areas are connected in a head-to-tail manner, or may be considered as one read-write area, and may be manufactured as one read-write area during processing.

Because the spacing between the two adjacent read-write areas 3 is small, and is far less than the width of the single data band, the quantity of read-write areas 3 is less than or equal to a quantity of data bands.

FIG. 4 and FIG. 5 are diagrams in which a plurality of read-write areas 3 are arranged in a height direction of a magnetic head. In both FIG. 4 and FIG. 5, an example in which the tape 20 has four data bands is used.

Refer to FIG. 4. The quantity of read-write areas 3 is equal to the quantity of data bands, the plurality of read-write areas 3 are arranged next to each other one by one in the height direction of the magnetic head, and a spacing between two adjacent read-write areas 3 is equal or approximately equal to a spacing between two adjacent data bands. In FIG. 4, four data bands are used as an example. In this case, there are also four read-write areas 3, which are respectively denoted as a read-write area 3a, a read-write area 3b, a read-write area 3c, and a read-write area 3d for ease of differentiation.

Refer to FIG. 5. The quantity of read-write areas 3 is less than the quantity of data bands, the plurality of read-write areas are arranged next to each other one by one in the height direction of the magnetic head, and a spacing between two adjacent read-write areas 3 is equal or approximately equal to a spacing between two adjacent data bands. In FIG. 5, four data bands and two read-write areas are used as an example. The two read-write areas are respectively denoted as a read-write area 3a and a read-write area 3b for differentiation.

Still refer to FIG. 4. When the magnetic head 10 accesses data on the magnetic tape 20, the plurality of read-write areas 3 of the magnetic head 10 are opposite to the plurality of data bands of the magnetic tape 20 in a one-to-one manner.

Therefore, as shown in FIG. 4, the magnetic head 10 can access data on all data bands of the magnetic tape 20 by moving only a small stroke in an up and down direction (that is, the magnetic head 10 fine-tunes a location of the magnetic head 10 up and down), where the travel distance is far less than the width of the single data band. In this solution, the magnetic head stroke height is H3, and H3 = W1 + 2d, for example, approximately 18 mm. The thickness of the tape drive is slightly greater than the width of the magnetic tape. In this case, the tape drive is thin, and a storage capacity of the tape drive is large.

In the solution in which the quantity of read-write areas 3 is less than the quantity of data bands, when the magnetic head 10 accesses data on the magnetic tape 20, the magnetic head 20 can access data on all data bands of the magnetic tape 20 by moving only a small quantity of times (in comparison with the solution shown in FIG. 2) in which each time of movement is a width of one or more data bands.

Refer to FIG. 5. When the magnetic head 10 accesses data on the magnetic tape 20, the magnetic head 20 can access data on the four data bands of the magnetic tape 20 by moving only once in which a travel distance is a width of two data bands. In this solution, the magnetic head stroke height is H4, and H4 = W1 + 4h + 2d, for example, approximately 30 mm. It is clear that in comparison with the solution shown in FIG. 2, the magnetic head stroke height is reduced by 2h, for example, 6 mm.

(II) The plurality of read-write areas 3 are arranged in the height direction of the magnetic head, and a spacing between two adjacent read-write areas 3 matches a width of one or more data bands.

For example, the plurality of read-write areas 3 are arranged in the height direction of the magnetic head, and the spacing between the two adjacent read-write areas 3 is equal or approximately equal to a width of one data band.

In this way, when the magnetic head 10 accesses data on the magnetic tape 20, the two adjacent read-write areas 3 are separated by one data band of the magnetic tape 20. In the solution in which the two adjacent read-write areas 3 are separated by one data band, the magnetic head 10 can access data on all data bands of the magnetic tape 20 by moving once in which a travel distance is the width of the single data band, thereby reducing the travel distance of the magnetic head 10.

For another example, the plurality of read-write areas 3 are arranged in the height direction of the magnetic head, and the spacing between the two adjacent read-write areas 3 is equal or approximately equal to a width of a plurality of data bands.

In this way, when the magnetic head 10 accesses data on the magnetic tape 20, the two adjacent read-write areas 3 are separated by a plurality of data bands of the magnetic tape 20. In the solution in which the two adjacent read-write areas 3 are separated by a plurality of data bands, both a quantity of movement times of the magnetic head 10 and a quantity of read-write areas are considered, so that the quantity of movement times of the magnetic head 10 is small, and the quantity of read-write areas is also small. The small quantity of movement times can reduce a travel distance. The small quantity of read-write areas can reduce processing costs of the magnetic head, and a quantity of outgoing leads of the magnetic head (the read-write area has a large quantity of read heads and write heads, and signal cables need to be led out for both the read heads and the write heads).

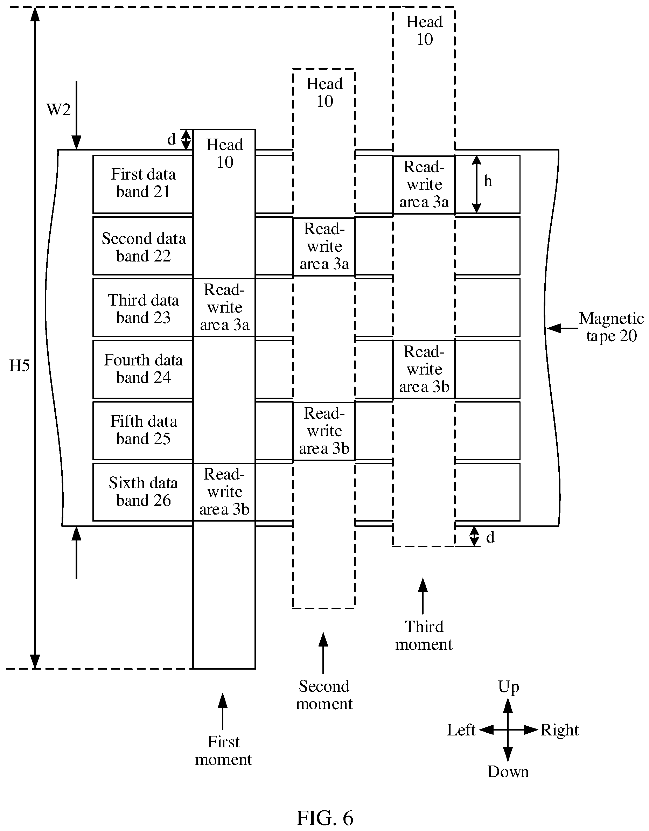

The foregoing "the spacing is equal or approximately equal to a width of a plurality of data bands" means that the spacing is approximately equal to a sum of widths of the plurality of data bands. If there is a gap greater than 0 between two adjacent data bands, as shown in FIG. 6, the spacing is approximately equal to a sum of the widths of the plurality of data bands and gaps between the plurality of data bands.

Because the spacing between the two adjacent read-write areas 3 matches a width of at least one data band, the quantity of read-write areas 3 is less than a quantity of data bands.

The quantity of read-write areas 3 may be set based on a simulation result and a test result. For example, the quantity of read-write areas 3 is selected based on the magnetic head stroke height and the quantity of outgoing leads of the magnetic head. The following shows examples of arrangement manners of two read-write areas 3 when there are two read-write areas 3 and the magnetic tape 20 has more than two data bands.
(1) The magnetic tape 20 has 2n data bands, where n is an integer greater than or equal to 2.

In other words, the magnetic tape 20 has an even number of data bands, for example, four, six, or even more data bands.

A spacing between the two read-write areas 3 may match a width of (n-1) data bands of the magnetic tape 20. In this way, when the magnetic head 10 accesses data on the magnetic tape 20, the two read-write areas 3 are separated by (n-1) data bands.

In this way, one read-write area 3 is responsible for accessing data on n data bands (the n data bands are contiguous in locations), and the other read-write area 3 is responsible for accessing data on the remaining n data bands (the n data bands are contiguous in locations).

For an even number of read-write areas 3, in the foregoing arrangement manner, according to the foregoing closest access principle, the magnetic head may access all data bands in a minimum travel distance.

For example, as shown in FIG. 3, the width of the magnetic tape 20 is W1, the magnetic tape 20 has a total of four data bands: the first data band 21, the second data band 22, the third data band 23, and the fourth data band 24, and the two read-write areas 3 are separated by one data band. In the solution shown in FIG. 3, when the magnetic head accesses the magnetic tape according to the closest access principle, the magnetic head stroke height of the magnetic head is H2, and H2 = W1 + 2h + 2d.

For another example, as shown in FIG. 6, the width of the magnetic tape 20 is W2, the magnetic tape 20 has a total of six data bands: the first data band 21, the second data band 22, the third data band 23, the fourth data band 24, the fifth data band 25, and the sixth data band 26, and the two read-write areas 3 (that is, the read-write area 3a and the read-write area 3b) are separated by two data bands. In the solution shown in FIG. 6, when the magnetic head accesses the magnetic tape according to the closest access principle, the magnetic head stroke height of the magnetic head is H5, and H5 = W2 + 4h + 2d.

(2) The magnetic tape 20 has (2n-1) data bands, where n is an integer greater than or equal to 2.

In other words, the magnetic tape 20 has an odd number of data bands, for example, three, five, or even more data bands.

A spacing between the two read-write areas 3 may match a width of (n-2) or (n-1) data bands of the magnetic tape 20. In this way, when the magnetic head 10 accesses data on the magnetic tape 20, the two read-write areas 3 are separated by (n-2) or (n-1) data bands.

In this way, one read-write area 3 is responsible for accessing data on (n-1) data bands (the (n-1) data bands are contiguous in locations), and the other read-write area 3 is responsible for accessing data on the remaining n data bands (the n data bands are contiguous in locations).

For an odd number of read-write areas 3, in the foregoing arrangement manner, according to the foregoing closest access principle, the magnetic head may access all data bands in a minimum travel distance.

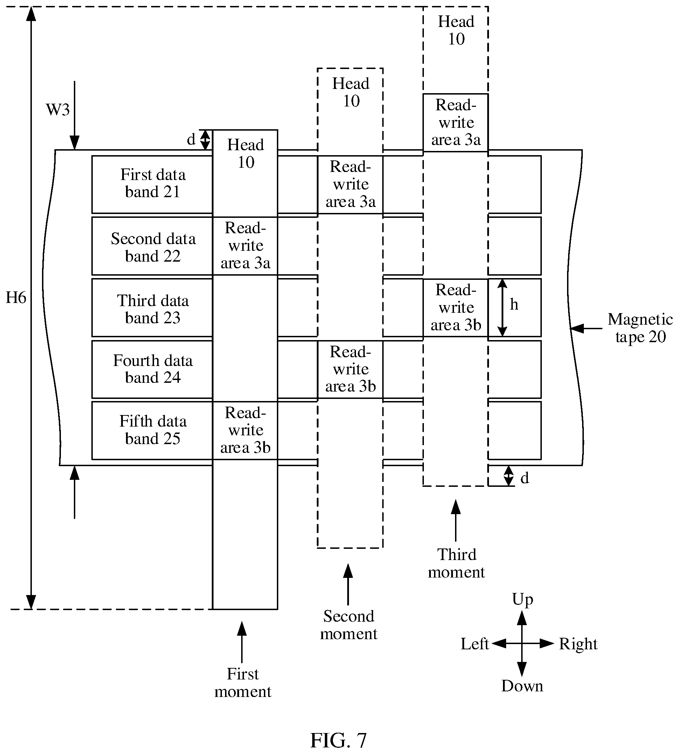

For example, as shown in FIG. 7, the width of the magnetic tape 20 is W3, the magnetic tape 20 has a total of five data bands: the first data band 21, the second data band 22, the third data band 23, the fourth data band 24, and the fifth data band 25, and the two read-write areas 3 (that is, the read-write area 3a and the read-write area 3b) may be separated by one or two data bands. In FIG. 7, an example in which the two read-write areas 3 are separated by two data bands is used. In the solution shown in FIG. 7, when the magnetic head accesses the magnetic tape according to the closest access principle, the magnetic head stroke height of the magnetic head is H6, and H6 = W3 + 4h + 2d.

In conclusion, refer to FIG. 2 to FIG. 7. Under same conditions, that is, on a premise that widths W of the magnetic tape are the same, sizes d of the magnetic head end extending out of the magnetic tape edge are the same, and heights of the read-write area are the same, compared with the conventional solution in which there is only one read-write area, the solution in which the magnetic head includes a plurality of read-write areas can reduce the travel distance of the magnetic head in the height direction of the magnetic head.

After the travel distance of the magnetic head is reduced, the height of the magnetic head can also be shortened. The thickness of the tape drive is related to the travel distance of the magnetic head and the height of the magnetic head. Therefore, once the tape drive is thinned, when the thinned tape drive is used in a magnetic tape storage rack, and a size of the rack remains unchanged, more tape drives can be accommodated, thereby improving a tape storage density of the rack.

The magnetic head 10 is formed by splicing a plurality of magnetic stripes, and the magnetic stripe is usually manufactured on a wafer (wafer). Because the height of the magnetic head 10 is shortened, and heights of the magnetic head and the magnetic stripe are the same, the height of the magnetic stripe is also shortened. In this way, in comparison with the magnetic head in the conventional solution, more magnetic stripes are manufactured on a wafer with a same area, and more heads are manufactured, thereby reducing processing and manufacturing costs of the magnetic head.

It can be learned from the foregoing analysis that a larger quantity of read-write areas 3 included in the magnetic head 10 indicates a smaller travel distance of the magnetic head 10 in the up and down direction, and a smaller head stroke height. For example, if the quantity of read-write areas 3 is equal to the quantity of data bands, the magnetic head 10 does not need to move, and the travel distance is close to 0. However, excessive read-write areas 3 cause other problems. Refer to the following descriptions.

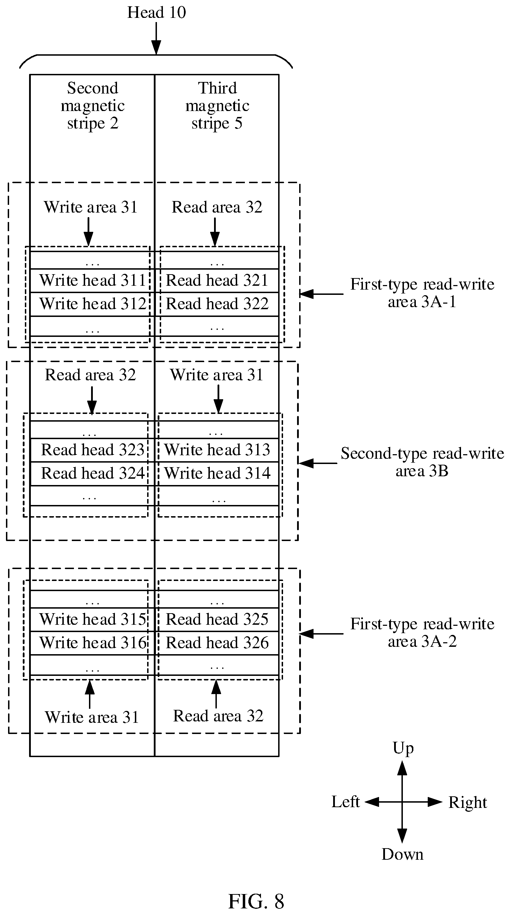

FIG. 8 is a diagram of the magnetic head 10 including three read-write areas 3. Two of the three read-write areas are first-type read-write areas 3A, and the other is a second-type read-write area 3B. In FIG. 8, the two first-type read-write areas 3A are respectively denoted as a first-type read-write area 3A-1 and a first-type read-write area 3A-2 for differentiation. In FIG. 8, for ease of distinguishing between write heads and read heads, the plurality of write heads are represented by reference numerals 311 to 316, and the plurality of read heads are represented by reference numerals 321 to 326.

Refer to FIG. 8. Each read-write area 3 includes a write area 31 and a read area 32 that are arranged in a width direction of the magnetic head 10, where the width direction of the magnetic head 10 is perpendicular to a height direction of the magnetic head, and the height direction of the magnetic head is consistent with a width direction of a magnetic tape.

For example, refer to FIG. 8. Each write area 31 includes a plurality of write heads 311, for example, 32 write heads 311. Each read area 321 includes a plurality of read heads 321, for example, 32 read heads 321. The write area 31 does not include a read head, and the read area 32 does not include a write head.

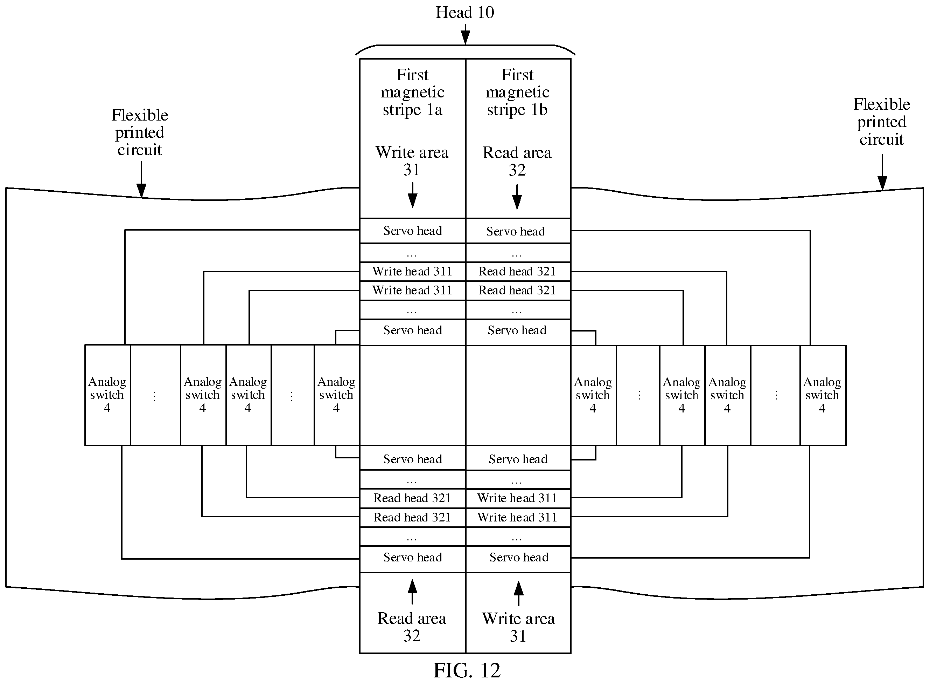

Refer to FIG. 12. Each write area 31 further includes two servo heads, the plurality of write heads 311 are located between the two servo heads, and the servo heads are configured to cause the plurality of write heads 311 to be in one-to-one correspondence with a plurality of tracks in one data band of the magnetic tape. Still refer to FIG. 12. Each read area 32 also includes two servo heads, the plurality of read heads 321 are located between the two servo heads, and the servo heads are configured to cause the plurality of read heads 321 to be in one-to-one correspondence with a plurality of tracks in one data band of the magnetic tape.

Each write head 311, each read head 321, and each servo head all need to be connected to a circuit of a tape drive through signal cables (for example, two positive and negative signal cables).

It can be learned that a larger quantity of read-write areas 3 indicates a larger quantity of access heads of the magnetic head 10. The access heads include the write head, the read head, and the servo head. In this case, a larger quantity of outgoing leads of the magnetic head 10 indicates a more complex circuit layout of the tape drive.

In addition, the magnetic head 10 is usually connected to the circuit through a flexible printed circuit (flexible printed circuit, FPC), and a quantity of signal cables carried by the flexible printed circuit is limited.

However, although the magnetic head shown in embodiments includes a plurality of read-write areas 3, the quantity of outgoing leads of the magnetic head can be controlled.

The following describes a solution for controlling the quantity of outgoing leads of the magnetic head.
(I) In the magnetic head in embodiments, each read-write area 3 includes two areas: one write area 31 and one read area 32. In comparison with a read-write area including three areas: write area-read area-write area in a conventional solution, one write area is removed, and in comparison with a read-write area including three areas: read area-write area-read area in a conventional solution, one read area is removed. In conclusion, in comparison with the conventional read-write area, one "write area" or one "read area" is removed in the read-write area in embodiments, to control the quantity of outgoing leads of the magnetic head.

The following describes a reason why the conventional read-write area is write area-read area-write area or read area-write area-read area, and a reason why the read-write area in embodiments can include one write area and one read area.

### (1) Reason why the conventional read-write area is write area-read area-write area or read area-write area-read area

In a tape storage technology, it is usually required that the magnetic head 10 can access data on the magnetic tape 20 when the magnetic tape 20 moves in a forward direction, and the magnetic head 10 can also access data on the magnetic tape 20 when the magnetic tape 20 moves in a reverse direction. That the magnetic tape 20 moves in a forward direction may be that the magnetic tape 20 moves right relative to the magnetic head 10, and that the magnetic tape 20 moves in a reverse direction may be that the magnetic tape 20 moves left relative to the magnetic head 10.

After data is written based on the write area, the read area needs to check whether the written data is correct.

Therefore, in a solution in which there is only one read-write area, the read-write area includes only one write area and one read area. For example, the unique read-write area is write area-read area. In this case, when the magnetic tape moves in a forward direction, the magnetic tape moves right relative to the magnetic head. The magnetic tape first passes through the write area. When the magnetic tape passes through the write area, the write area writes data. When the magnetic tape continues to move right through the read area, the read area checks whether the written data is correct. It can be learned that when the magnetic tape moves in a forward direction, the unique read-write area can normally access data. When the magnetic tape moves in a reverse direction, the magnetic tape moves left relative to the magnetic head. The magnetic tape first passes through the read area, and the read area can only read data but cannot write data. When the magnetic tape continues to move left through the write area, although the write area can write data, whether the data written by the write area is correct cannot be checked. It can be learned that when the magnetic tape moves in a reverse direction, the unique read-write area cannot normally access data.

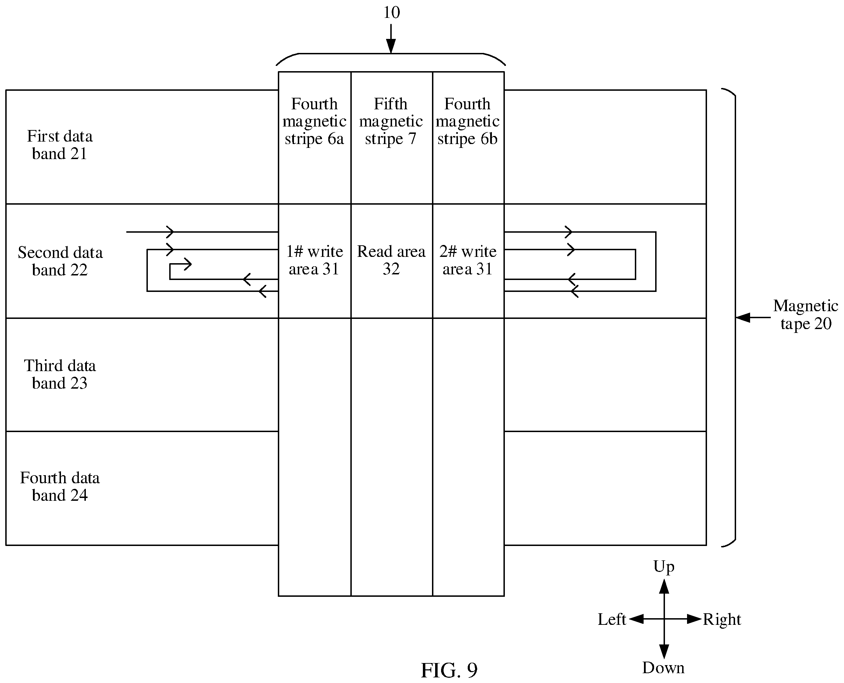

In a solution in which there is only one read-write area, for example, the read-write area is write area-read area-write area. Refer to FIG. 9. For ease of description, one of the two write areas is denoted as 1#, and the other is denoted as 2#.

FIG. 9 is a diagram of writing data on a magnetic tape by a magnetic head. When the magnetic tape 20 moves in a forward direction, the magnetic tape 20 moves right relative to the magnetic head 10, the 1# write area 31 in the unique read-write area 3 writes data on the second data band 22, and the read area 32 checks whether the data written to the second data band 22 is correct. When the magnetic tape 20 moves in a reverse direction, the magnetic tape 20 moves left relative to the magnetic head 10, the 2# write area 31 in the unique read-write area 3 writes data on the second data band 22, and the read area 32 checks whether the data written to the second data band 22 is correct. It can be learned that, during both forward and backward rotation of the magnetic tape, the unique read-write area can access data on the magnetic tape.

Similarly, in a solution in which there is only one read-write area, for example, the read-write area is 1# read area-write area-2# read area. When the magnetic tape moves in a forward direction, the magnetic tape moves right, the write area writes data, and the 2# read area checks whether the written data is correct. When the magnetic tape moves in a reverse direction, the magnetic tape moves left, the write area writes data, and the 1# read area checks whether the written data is correct.

Therefore, for a magnetic head including one read-write area, the unique read-write area is either write area-read area-write area or read area-write area-read area.

### (2) Reason why each read-write area may include one write area and one read area in a solution in which there are a plurality of read-write areas

As shown in FIG. 8, because there are a plurality of read-write areas, the plurality of read-write areas 3 may be classified into two types of read-write areas based on an arrangement sequence of the write area and the read area, which are respectively denoted as a first-type read-write area 3A and a second-type read-write area 3B. The first-type read-write area 3A may be arranged in a sequence: write area 31-read area 32, and the second-type read-write area 3B may be arranged in a sequence: read area 32-write area 31. A same head may have only one first-type read area and one second-type read area, or may include more first-type read areas and more second-type read-write areas.

In this case, when the magnetic tape 20 moves in a forward direction, the magnetic tape moves right relative to the magnetic head. Refer to FIG. 8. Any read-write area 3 in the first-type read-write area 3A may access data on the magnetic tape, or a plurality of read-write areas 3 in the first-type read-write area 3A may access data on the magnetic tape. When the magnetic tape 20 moves in a reverse direction, the magnetic tape moves left relative to the magnetic head. Refer to FIG. 8. Any read-write area in the second-type read-write area 3B may access data on the magnetic tape, or a plurality of read-write areas 3 in the second-type read-write area 3B may access data on the magnetic tape.

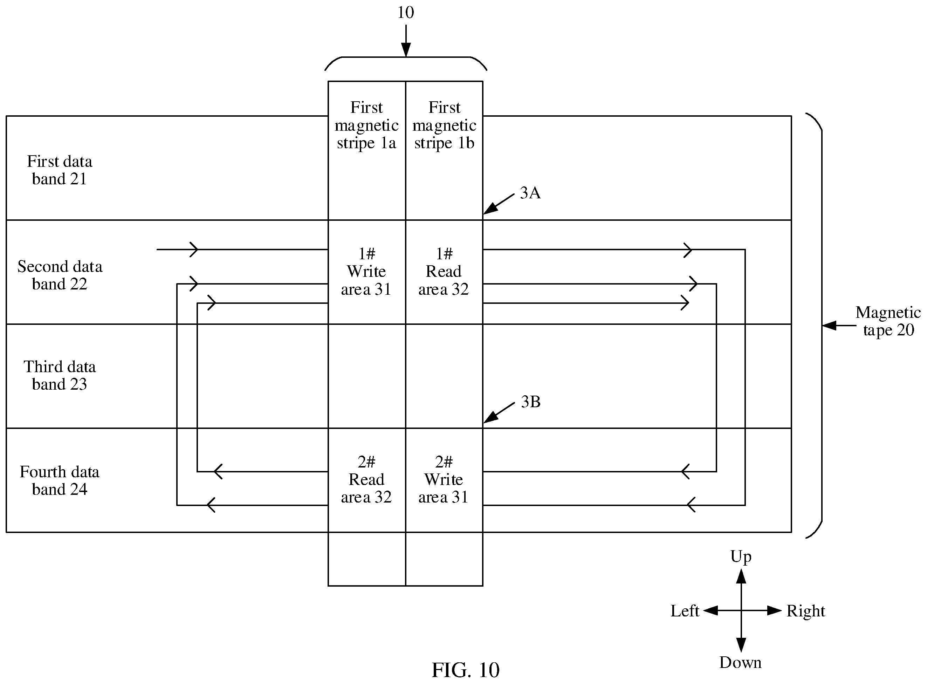

For example, as shown in FIG. 10, an example in which there are two read-write areas 3 is used, where one is a first-type read-write area 3A, and the other is a second-type read-write area 3B. When the magnetic tape 20 moves in a forward direction, the magnetic tape moves right relative to the magnetic head, a 1# write area 31 in the first-type read-write area 3A writes data on the second data band 22, and a 1# read area 32 checks whether the written data is correct. When the magnetic tape 20 moves in a reverse direction, the magnetic tape moves left relative to the magnetic head, a 2# write area 31 in the second-type read-write area 3B writes data on the fourth data band 24, and a 2# read area 32 checks whether the written data is correct.

Therefore, for a magnetic head including a plurality of read-write areas, because the plurality of read-write areas include a first-type read-write area and a second-type read-write area whose arrangement manners of a write area and a read area are opposite to each other, although each read-write area includes only one write area and one read area, the magnetic head can still access data on the magnetic tape during both forward and backward rotation of the magnetic tape.

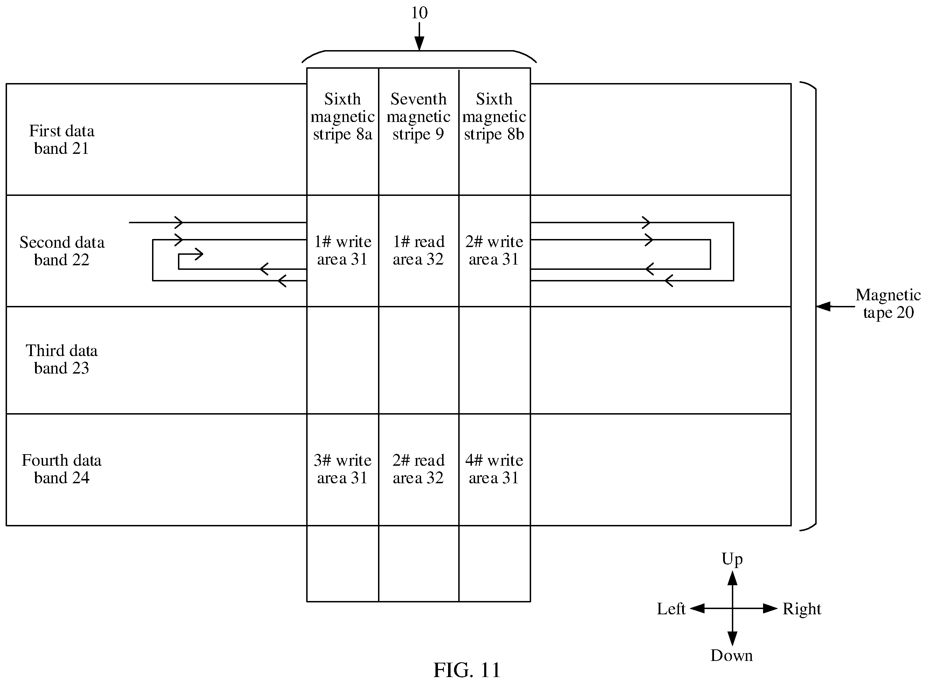

It should be noted that, in the solution in which there are a plurality of read-write areas, each read-write area may alternatively be write area-read area-write area or read area-write area-read area. FIG. 11 shows an example in which there are two read-write areas, and each read-write area is write area-read area-write area. Refer to FIG. 11. When the magnetic tape 20 moves in a forward direction, the magnetic tape moves right relative to the magnetic head, a 1# write area 31 may write data on the second data band 22, and a 1# read area 32 may check whether the written data is correct. When the magnetic tape 20 moves in a forward direction, the magnetic tape moves right relative to the magnetic head. Alternatively, a 3# write area 31 may write data on the fourth data band 24, and a 2# read area 32 may check whether the written data is correct.

When the magnetic tape 20 moves in a reverse direction, the magnetic tape moves left relative to the magnetic head, a 2# write area 31 may write data on the second data band 22, and the 1# read area 32 may check whether the written data is correct. When the magnetic tape 20 moves in a reverse direction, the magnetic tape moves left relative to the magnetic head. Alternatively, a 4# write area 31 may write data on the fourth data band 24, and the 2# read area 32 may check whether the written data is correct.

It should be noted that, in the solution in which there are a plurality of read-write areas, alternatively, a part of read-write areas may be write area-read area-write area, and the other part of read-write areas may be read area-write area-read area.

It should be noted that a single write area 31 is a continuous area, and is not divided by the read area 32, and a single read area 32 is a continuous area, and is not divided by the write area.

(II) The quantity of outgoing leads of the magnetic head is controlled through an analog switch.

FIG. 12 is a diagram of a structure of a magnetic head 10 including two read-write areas 3.

Refer to FIG. 12. Each read-write area 3 includes a plurality of access heads, and the access head may be a write head 311, a read head 321, or a servo head. k access heads in different read-write areas 3 are connected through a common analog switch 4 to a circuit in which a tape drive is located.

The analog switch is configured to: connect a circuit in which a part of the k access heads are located, and disconnect a circuit in which a remaining part of the access heads are located.

k is greater than or equal to 2, and is less than or equal to a total quantity of read-write areas 3. In addition, a value of k is related to a type of the analog switch 4. For example, if the analog switch 4 is a single-pole double-throw switch, k is 2. If the analog switch is a single-pole triple-throw switch, k is 3.

The k access heads may be k write heads 311, or may be k read heads 321, or may include a write head 311 and a read head 321, where a sum of a quantity of write heads 311 and a quantity of read heads 321 is k.

In this case, k write heads 311 in different read-write areas 3 are connected through the common analog switch 4 to the circuit in which the tape drive is located. For another example, k read heads 321 in different read-write areas 3 are connected through the analog switch 4 to the circuit in which the tape drive is located. For another example, refer to FIG. 8. The write head 311 and the read head 321 in different read-write areas 3 are connected through the analog switch 4 to the circuit in which the tape drive is located.

The k access heads in the different read-write areas 3 are connected to the circuit through one analog switch. For example, the k access heads are connected to k output terminals of the analog switch, and one input terminal of the analog switch is connected to the circuit of the tape drive. For example, one input terminal of the analog switch is connected to a flexible printed circuit. It can be learned that the analog switch can combine k signal cables into one signal cable to be connected to the circuit of the tape drive, thereby reducing a quantity of signal cables connected to the circuit.

For example, as shown in FIG. 12, the magnetic head includes two read-write areas 3, and the analog switch is the single-pole double-throw switch. In this case, for the quantity of outgoing leads of the magnetic head, in comparison with the solution shown in FIG. 11, a quantity of signal cables is reduced by half, to control the quantity of outgoing leads of the magnetic head.

In an example, the analog switch may be processed by using a semiconductor technology, and packaged with the magnetic head 10 (that is, packaged together), to implement integration of the magnetic head and the analog switch.

In an example, the analog switch may be used in the magnetic head 10 including a plurality of read-write areas 3. For example, the analog switch may be used in a solution in which there are a plurality of read-write areas 3, and each read-write area 3 includes one write area 31 and one read area 32. For another example, the analog switch may alternatively be used in a solution in which there are a plurality of read-write areas 3, and each read-write area 3 includes two write areas 31 and one read area 32. For another example, the analog switch may alternatively be used in a solution in which there are a plurality of read-write areas 3, and each read-write area 3 includes one write area 31 and two read areas 32. For another example, the analog switch may alternatively be used in a solution in which there are a plurality of read-write areas 3, a part of read-write areas 3 include two write areas 31 and one read area 32, and a remaining part of read-write areas 3 include one write area 31 and two read areas 32.

The foregoing is a policy for controlling the quantity of outgoing leads of the magnetic head when the magnetic head includes the plurality of read-write areas 3.

The following describes features and a quantity of magnetic stripes included in the magnetic head 10.

The magnetic head 10 is formed by splicing a plurality of magnetic stripes in a width direction. For example, the plurality of magnetic stripes are fastened horizontally by using glue to form the magnetic head.

A horizontal direction of the magnetic stripe is a width direction of the magnetic stripe, and as shown in FIG. 8, is a left and right direction. A vertical direction of the magnetic stripe is a height direction of the magnetic stripe. The height direction of the magnetic stripe is consistent with the height direction of the magnetic head, and is also consistent with the width direction of the magnetic tape. As shown in FIG. 8, all of the directions are up and down directions.

In the conventional solution including one read-write area, because the read-write area is arranged in a sequence: write area-read area-write area in a horizontal direction, three areas are included in the horizontal direction, and one horizontal area occupies one magnetic stripe. Therefore, the conventional head needs to use three magnetic stripes, as shown in FIG. 9.

The magnetic head shown in FIG. 9 is used as an example. Refer to FIG. 9. The magnetic head 10 includes only one read-write area 3, and the read-write area 3 of the magnetic head 10 needs to include two write areas 31 and one read area 32 horizontally. Therefore, the read-write area 3 includes three "areas" horizontally, and one horizontal "area" occupies one magnetic stripe. In this case, the magnetic head 10 needs to include three magnetic stripes horizontally.

Therefore, as shown in FIG. 9, in the solution including only one read-write area 3, the magnetic head includes one fifth magnetic stripe 7 and two fourth magnetic stripes 6. The two fourth magnetic stripes 6 in FIG. 9 are respectively denoted as a fourth magnetic stripe 6a and a fourth magnetic stripe 6b for differentiation. Still refer to FIG. 9. A read area 32 is distributed on the fifth magnetic stripe 7, a write area 31 is distributed on the fourth magnetic stripe 6, and the fifth magnetic stripe 7 is clamped between the two fourth magnetic stripes 6 to form the magnetic head 10, so as to form a read-write area arranged in a sequence: write area-read area-write area horizontally.

However, in the solution including a plurality of read-write areas, because each read-write area may include only one write area and one read area in a horizontal direction, there are only two areas in the horizontal direction. Therefore, the magnetic head needs only two magnetic stripes, as shown in FIG. 8.

Therefore, in comparison with the conventional head, one magnetic stripe may be removed in the magnetic head in embodiments, thereby saving materials, and helping reduce processing and manufacturing costs of the magnetic head.

The solution of processing the magnetic head by using two magnetic stripes may include the following several examples.

Solution 1: Refer to FIG. 8. The magnetic head 10 includes a second magnetic stripe 2 and a third magnetic stripe 5. The second magnetic stripe 2 includes a write areas 31 and b read areas 32, and the a write areas 31 and the b read areas 32 are sequentially distributed in a height direction of the second magnetic stripe 2. The third magnetic stripe 5 includes a read areas 32 and b write areas 31, and the a read areas 32 and the b write areas 31 are sequentially distributed in a height direction of the third magnetic stripe 5, where both a and b are integers greater than or equal to 1. In FIG. 8, an example in which a=2 and b=1 is used.

An arrangement manner of the a write areas of the second magnetic stripe 2 is completely the same as an arrangement manner of the a read-write areas of the third magnetic stripe 5. An arrangement manner of the b read areas of the second magnetic stripe 2 is completely the same as an arrangement manner of the b write areas of the third magnetic stripe 5.

In this way, the second magnetic stripe 2 and the third magnetic stripe 5 are spliced in a width direction, the a write areas 31 of the second magnetic stripe 2 and the a read areas 32 of the third magnetic stripe 5 are spliced in the width direction to form a first-type read-write areas 3A, and the b read areas 32 of the second magnetic stripe 2 and the b write areas 31 of the third magnetic stripe 5 are spliced in the width direction to form b second-type read-write areas 3B.

Solution 2: Refer to FIG. 10. The magnetic head 10 includes two first magnetic stripes 1, where the two first magnetic stripes 1 in FIG. 10 are respectively denoted as a first magnetic stripe 1a and a first magnetic stripe 1b for differentiation. Still refer to FIG. 10. Each first magnetic stripe 1 includes m write areas 31 and m read areas 32 that are distributed in a height direction. The two first magnetic stripes 1 are spliced in a width direction, and a write area 31 and a read area 32 that are not on a same first magnetic stripe 1 are spliced in the width direction, to form m first-type read-write areas 3A arranged in a sequence: write area-read area, and m second-type read-write areas 3B arranged in a sequence: read area-write area, where m is greater than or equal to 1, and in FIG. 10, m=1 is used as an example.

In this solution, one first magnetic stripe 1 may become the other first magnetic stripe 1 by rotating 180 degrees. For example, as shown in FIG. 10, the first magnetic stripe 1b becomes the first magnetic stripe 1a by rotating 180 degrees.

For example, m=1 is used as an example. Each first magnetic stripe 1 includes only one write area and one read area in a vertical direction. For example, a write area is above a read area in one first magnetic stripe 1, and a read area is above a write area in the other first magnetic stripe 1. In this case, one first magnetic stripe 1 becomes the other first magnetic stripe 1 by rotating 180 degrees.

It should be noted that, in the solution 2, the two first magnetic stripes 1 are not necessarily equal in height, provided that when the two first magnetic stripes 1 are horizontally spliced, a write area of one first magnetic stripe 1 is opposite to a read area of the other first magnetic stripe 1 in a horizontal direction, to form a read-write area.

Solution 3: In the solution 1, a=b, locations of the write areas 31 of the second magnetic stripe 2 and locations of the read areas 32 of the second magnetic stripe 2 are distributed symmetrically about a horizontal center line of the second magnetic stripe 2 one-to-one, and locations of the read areas 32 of the third magnetic stripe 5 and locations of the write areas 31 of the third magnetic stripe 5 are distributed symmetrically about a horizontal center line of the third magnetic stripe 5 one-to-one. In this case, the second magnetic stripe 2 is mirror-symmetric with the third magnetic stripe 5 by rotating 180 degrees, so that the second magnetic stripe 2 can become the third magnetic stripe 5 by rotating 180 degrees.

It should be noted that, in the solution 3, the second magnetic stripe 2 and the third magnetic stripe 5 are equal in height.

In the foregoing solution 2, the magnetic head 10 includes two read-write areas 3. For a manufacturing process of splicing two first magnetic stripes 1 to form the magnetic head 10, refer to the following descriptions.

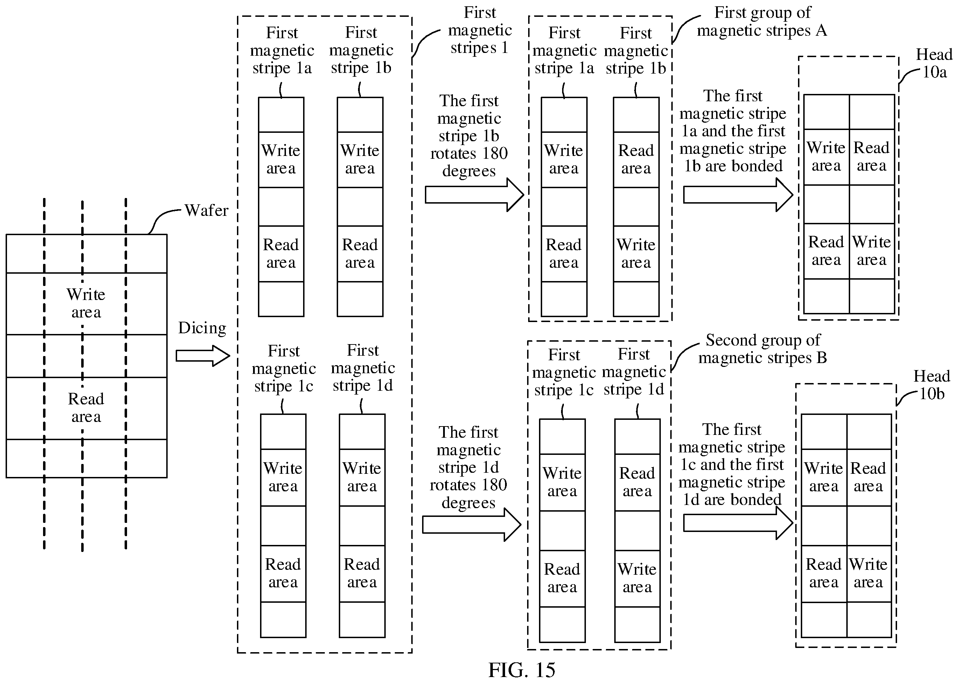

FIG. 15 is a diagram of a manufacturing process of splicing two first magnetic stripes 1 to form a magnetic head 10.

Refer to FIG. 15. First, a wafer (wafer) including a write area and a read area is processed. FIG. 15 shows a partial area of the wafer, and a complete wafer is generally in a circular shape. Then, wafer dicing is performed to obtain a large quantity of magnetic stripes. These magnetic stripes are referred to as first magnetic stripes 1. For ease of description, a, b, c, d, ... are added to the reference numerals for differentiation. In FIG. 15, an example in which four first magnetic stripes 1 are obtained through dicing is used for description.

Then, for the plurality of first magnetic stripes 1, two first magnetic stripes are used as a group to obtain a plurality of groups of magnetic stripes. In FIG. 15, an example in which two groups of magnetic stripes are obtained by using the four first magnetic stripes 1 is used. The two groups of magnetic stripes are respectively denoted as a first group of magnetic stripes A and a second group of magnetic stripes B for differentiation.

Still refer to FIG. 15. After rotating 180 degrees, a first magnetic stripe 1b in the first group of magnetic stripes A is spliced with a first magnetic stripe 1a in a horizontal direction to obtain a magnetic head 10 including two read-write areas 3, and the magnetic head 10 is denoted as a magnetic head 10a.

Similarly, refer to FIG. 15. After rotating 180 degrees, a first magnetic stripe 1d in the second group of magnetic stripes A is spliced with a first magnetic stripe 1c in a horizontal direction to obtain another head 10 including two read-write areas 3, and the magnetic head 10 is denoted as a magnetic head 10b.

By analogy, a plurality of heads 10 may be obtained by using one wafer.

It can be learned that, in the solution including two first magnetic stripes 1, only one type of wafer needs to be processed. In comparison with a conventional technology in which two types of wafers or even three types of wafers need to be processed, it is clear that this solution can reduce processing costs.

In the foregoing, the magnetic head including a plurality of read-write areas is formed by splicing two magnetic stripes. Alternatively, the magnetic head including a plurality of read-write areas may be formed by splicing three magnetic stripes. The following describes several implementation solutions.

Example 1: For the magnetic head including a plurality of read-write areas 3, the read-write area 3 of the magnetic head may alternatively be a read-write area arranged in a sequence: write area-read area-write area horizontally. In this case, refer to FIG. 11. The magnetic head 10 needs to include two sixth magnetic stripes 8 and one seventh magnetic stripe 9. The two sixth magnetic stripes 8 in FIG. 11 are respectively denoted as a sixth magnetic stripe 8a and a sixth magnetic stripe 8b for differentiation.

Still refer to FIG. 11. p (p=2 is used as an example in FIG. 11) write areas 31 are distributed in the sixth magnetic stripe 8 in a vertical direction. Therefore, the sixth magnetic stripe 8 may be denoted as a write magnetic stripe. p (q=2 is used as an example in FIG. 11) read areas 32 are distributed in the seventh magnetic stripe 9 in a vertical direction. Therefore, the seventh magnetic stripe 9 may be denoted as a read magnetic stripe. An arrangement manner of the p write areas 31 in the vertical direction is the same as an arrangement manner of the p read areas in the vertical direction. In this way, the seventh magnetic stripe 9 is clamped between the two sixth magnetic stripes 8, to be spliced to form a magnetic head including p read-write areas that are arranged in a sequence: write area-read area-write area horizontally. p is an integer greater than or equal to 2. In FIG. 11, an example in which p is 2 is used.

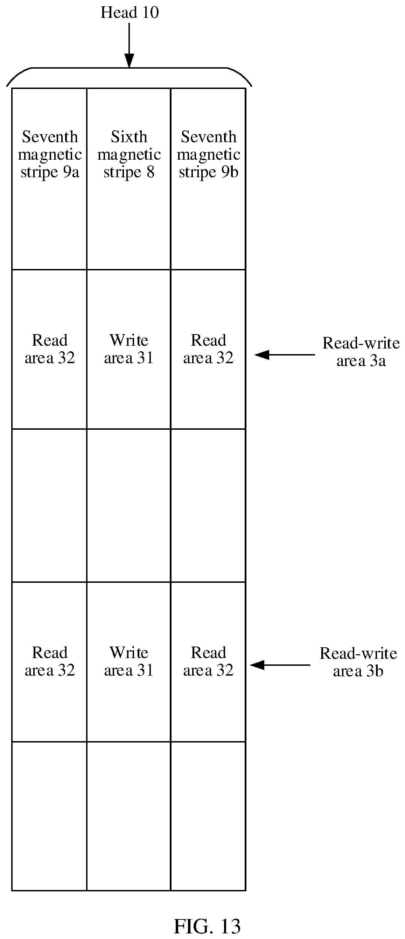

Example 2: For the magnetic head including a plurality of read-write areas 3, the read-write area 3 of the magnetic head may alternatively be a read-write area arranged in a sequence: read area-write area-read area horizontally. In this case, as shown in FIG. 13, the magnetic head 10 needs to include one sixth magnetic stripe 8 (that is, a write magnetic stripe) and two seventh magnetic stripes 9 (that is, read magnetic stripes). In FIG. 13, the two seventh magnetic stripes 9 are respectively denoted as a seventh magnetic stripe 9a and a seventh magnetic stripe 9b for differentiation. The sixth magnetic stripe 8 is clamped between the two seventh magnetic stripes 9, to be spliced to form a magnetic head including p read-write areas that are arranged in a sequence: read area-write area-read area horizontally. In FIG. 13, an example in which p is 2 is used. As shown in FIG. 13, in the magnetic head 10, two read-write areas are formed, which are respectively denoted as a read-write area 3a and a read-write area 3b for differentiation.

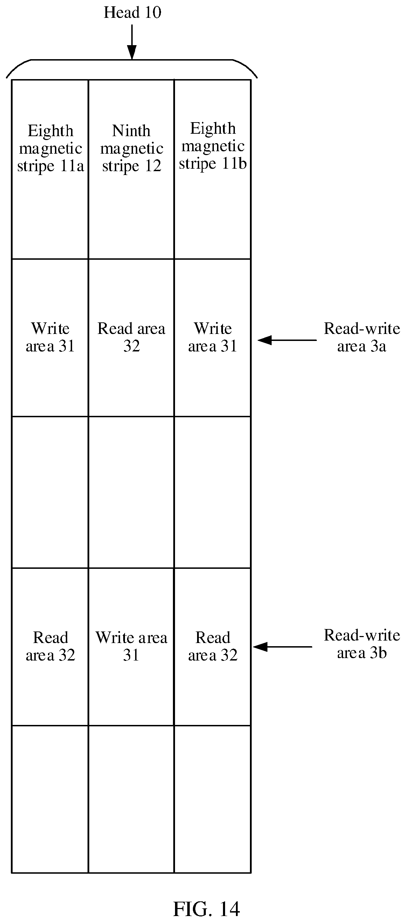

Example 3: For the magnetic head including a plurality of read-write areas 3, a part of read-write areas may be a read-write area arranged in a sequence: write area-read area-write area horizontally, and the other part of read-write area may be a read-write area arranged in a sequence: read area-write area-read area horizontally. For example, there are two read-write areas, one is a read-write area arranged in a sequence: write area-read area-write area, and the other is a read-write area arranged in a sequence: read area-write area-read area. In this case, as shown in FIG. 14, the magnetic head includes two eighth magnetic stripes 11 and one ninth magnetic stripe 12. The two eighth magnetic stripes 11 in FIG. 14 are respectively denoted as an eighth magnetic stripe 11a and an eighth magnetic stripe 11b for differentiation. Still refer to FIG. 14. The eighth magnetic stripe 11 includes one write area 31 and one read area 32 in a vertical direction, where an arrangement manner may be that the write area 31 is above the read area 32. The ninth magnetic stripe 12 includes one write area 31 and one read area 32 in a vertical direction, where an arrangement manner may be that the read area 32 is above the write area 31. The ninth magnetic stripe 12 is clamped between the two eighth magnetic stripes 11, to be spliced to form two read-write areas 3. One of the two read-write areas is a read-write area 3a arranged in a sequence: write area 31-read area 32-write area 31, and the other is a read-write area 3b arranged in a sequence: read area 32-write area 31-read area 32.

Still refer to FIG. 14. It can be learned that actually, a structure of the eighth magnetic stripe 11 is completely the same as that of the ninth magnetic stripe 12, and the eighth magnetic stripe 11 becomes the ninth magnetic stripe 12 when rotated 180 degrees around the center of the eighth magnetic stripe 11. Therefore, a magnetic head manufacturer only needs to produce magnetic stripes of one specification, and this simplifies a process in comparison with a solution in which magnetic stripes of different specifications are produced to form a magnetic head. In this solution, although three magnetic stripes are used, the three magnetic stripes are a same magnetic stripe and are made of one type of wafer. It should be noted that the foregoing uses an example in which each of the eighth magnetic stripe 11 and the ninth magnetic stripe 12 includes only one read area and one write area for description. If the magnetic head includes more than two read-write areas, magnetic stripes forming the magnetic head also comply with this symmetry rule, and this also has an effect of simplifying a process. On the contrary, in a conventional technology, a plurality of magnetic stripes forming the magnetic head are different. Therefore, the magnetic head manufacturer has to generate magnetic stripes of a plurality of specifications.

For a manufacturing process of the magnetic head in FIG. 14, refer to FIG. 15. However, during manufacturing of the magnetic head shown in FIG. 14, three magnetic stripes need to be used as a group, and one magnetic stripe in each group of magnetic stripes is rotated by 180 degrees to be spliced with the other two magnetic stripes, so as to obtain the magnetic head shown in FIG. 14.

Based on the foregoing descriptions, comparison between the magnetic head including a plurality of read-write areas 3 in embodiments and the magnetic head including only one read-write area shows that, when a magnetic tape with a same width is accessed, for example, a magnetic tape including four data bands is accessed, a travel distance of the magnetic head in a case that the plurality of read-write areas access data on the four data bands according to the closest access principle is less than a travel distance of the magnetic head in a case that the one read-write area accesses data on the four data bands.

Once the travel distance of the magnetic head is reduced, the height of the magnetic head can also be shortened. The thickness of the tape drive is positively correlated with the travel distance of the magnetic head, and is also positively correlated with the height of the magnetic head. Therefore, once the travel distance of the magnetic head is reduced, and the height of the magnetic head is shortened, the tape drive can be thinned.

Once the tape drive is thinned, when the thinned tape drive is used in the magnetic tape storage rack, and the size of the rack remains unchanged, more tape drives can be accommodated, thereby improving the tape storage density of the rack.

The height of the magnetic head is shortened, and magnetic stripes spliced to form the magnetic head and the magnetic head are equal in height. Therefore, heights of the magnetic stripes are also shortened. Because the magnetic stripes are manufactured on a wafer, on a wafer with a same area, more magnetic stripes can be manufactured to be spliced to form more heads, thereby reducing processing and manufacturing costs of the magnetic head.

In addition, each read-write area may include only one write area and one read area, so that the magnetic head can be formed by splicing only two magnetic stripes, thereby saving materials and further reducing processing and manufacturing costs of the magnetic head.

Further, in a solution in which two magnetic stripes are spliced, and one of the magnetic stripes becomes the other magnetic stripe when rotated by 180 degrees, because the two magnetic stripes are a same magnetic stripe with a same structure and material, the two magnetic stripes need to be manufactured by using only one type of wafer, so that a processing process of the magnetic head can be simplified.

In addition, compared with manufacturing the two magnetic stripes of the magnetic head by using two types of wafers, manufacturing the two magnetic stripes of the magnetic head by using one type of wafer reduces processing and manufacturing costs of the magnetic head.

In addition, the read-write area may include only one write area and one read area. This helps control the quantity of outgoing leads of the magnetic head, so that the quantity of outgoing leads of the magnetic head is not excessive.

An embodiment further provides a tape drive. The tape drive includes the foregoing head 10 and a motor that drives the magnetic head 10 to move.

In an example, the tape drive may not include a magnetic tape, but the tape drive has a tape port for inserting and taking out the magnetic tape. The foregoing magnetic tape 20 may be inserted into the tape port of the tape drive in a pluggable manner, where the magnetic tape 20 is a magnetic medium configured to provide data storage.

For example, an empty magnetic tape may be inserted into the tape port of the tape drive, to store data in the magnetic tape. A magnetic tape full of data may be taken out from the tape port of the tape drive, and placed in a tape library, and then the empty magnetic tape is insert into the tape drive to continue data storage. When needing to access a magnetic tape in the tape library, a user only needs to take out the magnetic tape from the tape library and insert the magnetic tape into the tape port of the tape drive, and the tape drive reads data in the magnetic tape.

Inserting the magnetic tape into the tape drive, taking out the magnetic tape from the tape drive, inserting the magnetic tape into the tape library, and taking out the magnetic tape from the tape library may all be performed by a robot arm.

The tape library may be a rack for storing the magnetic tape. For example, the magnetic tape and the tape drive are arranged in different racks, some racks are used for storing magnetic tapes (these racks are tape libraries), and some other racks are used for arranging tape drives. The tape library may alternatively be a slot, in a rack, for storing the magnetic tape. For example, the magnetic tape and the tape drive are arranged in a same rack, some slots in the rack are used for installing tape drives, and some other slots are used for inserting magnetic tapes (these slots are tape libraries).

In another example, the tape drive may alternatively include the foregoing magnetic tape 20, and the magnetic tape 20 is fixedly installed in a housing of the tape drive, so that the tape drive becomes an integrated tape drive, and the magnetic tape cannot be taken out from the tape drive. The integrated tape drive helps protect the magnetic tape from being contaminated and protect data stored in the magnetic tape from being lost.

In the solution in which the magnetic tape is fixed in the tape drive, the tape library stores the tape drive instead of the magnetic tape. Tape drives include a tape drive full of data, a tape drive in which data is being stored, and a tape drive in which data has not been stored.

In the solution in which the magnetic tape is fixed in the tape drive, the magnetic tape does not need to be taken out from the tape drive. In this way, a robot arm can be removed, and more tape drives are arranged in the tape library.

In the solution in which the magnetic tape is fixed in the tape drive, an appearance of the tape drive is similar to that of a hard disk drive (hard disk drive, HDD), and the tape drive may be referred to as a "tape reel". Because the tape drive is thin, the tape drive may be deployed in a 3.5-inch HDD form.

An embodiment further provides a magnetic tape storage rack. The magnetic tape storage rack includes a rack, a controller, and the foregoing tape drive, and both the controller and the tape drive are located in slots of the rack.

The controller may be a control board, and is configured to: receive an access request from a user, and access a magnetic tape in the tape drive based on the access request, where the access may be data writing or data reading, and the data writing is storing data in the magnetic tape.

In an example, the tape drive may be located in the slot of the rack in a pluggable manner, or the tape drive is fixedly located in the slot of the rack.

In an example, because the tape drive is thin, more tape drives may be stored in a cabinet, thereby improving a tape storage density of the cabinet.

In an example, the tape drive may be an integrated tape drive, and the magnetic tape is integrated in the tape drive. In this case, no robot arm is needed to operate the magnetic tape, and the robot arm may be removed in the cabinet. Space occupied by the robot arm may be used to arrange the tape drive, so that more tape drives are stored in the cabinet, thereby further improving a tape storage density of the cabinet.

## Claims

1. A magnetic head (10), wherein the magnetic head (10) comprises a plurality of read-write areas (3), the plurality of read-write areas (3) are arranged in a height direction of the magnetic head (10), and the plurality of read-write areas (3) are spaced apart from each other;
each of the plurality of read-write areas (3) comprises a write area (31) and a read area (32) that are arranged in a width direction of the magnetic head (10), the write area (31) comprises a write head (311) for writing data to a magnetic tape (20), and the read area (32) comprises a read head (321) for reading data from the magnetic tape (20); and
when data access needs to be performed on a target data band of the magnetic tape (20), a read-write area (3) closest to the target data band performs data access on the target data band.

2. The magnetic head (10) according to claim 1, wherein each of the plurality of read-write areas (3) comprises one write area (31) and one read area (32), the plurality of read-write areas (3) comprise a first-type read-write area (3A) and a second-type read-write area (3B), and an arrangement sequence of a write area (31) and a read area (32) in the first-type read-write area (3A) is opposite to an arrangement sequence of a write area (31) and a read area (32) in the second-type read-write area (3B).

3. The magnetic head (10) according to claim 2, wherein the magnetic head (10) is configured to:
when the magnetic tape (20) moves in a first direction, perform data access on a data band of the magnetic tape (20) via the first-type read-write area (3A); and
when the magnetic tape (20) moves in a second direction, perform data access on another data band of the data band (20) via the second-type read-write area (3B), wherein the first direction is opposite to the second direction.

4. The magnetic head (10) according to any one of claims 1 to 3, wherein the magnetic head (10) comprises two first magnetic stripes (1), each first magnetic stripe (1) comprises m write areas (31) and m read areas (32) that are distributed in a height direction, and m is an integer greater than or equal to 1; and
the two first magnetic stripes (1) are spliced in a width direction, m write areas (31) of one first magnetic stripe (1) and m read areas (32) of the other first magnetic stripe (1) form m first-type read-write areas (3A), and m read areas (32) of the one first magnetic stripe (1) and m write areas (31) of the other first magnetic stripe (1) form m second-type read-write areas (3B).

5. The magnetic head (10) according to any one of claims 1 to 3, wherein the magnetic head (10) comprises a second magnetic stripe (2) and a third magnetic stripe (5), the second magnetic stripe (2) comprises a write areas (31) and b read areas (32) that are arranged in a height direction, the third magnetic stripe (5) comprises a read areas (32) and b write areas (31) that are arranged in a height direction, and both a and b are integers greater than or equal to 1;
an arrangement manner of the a write areas (31) of the second magnetic stripe (2) is the same as an arrangement manner of the a read areas (32) of the third magnetic stripe (5), and an arrangement manner of the b read areas (32) of the second magnetic stripe (2) is the same as an arrangement manner of the b write areas (31) of the third magnetic stripe (5); and
the second magnetic stripe (2) and the third magnetic stripe (5) are spliced in a width direction, the a write areas (31) of the second magnetic stripe (2) and the a read areas (32) of the third magnetic stripe (5) form a first-type read-write areas (3A), and the b read areas (32) of the second magnetic stripe (2) and the b write areas (31) of the third magnetic stripe (5) form b second-type read-write areas (3B).

6. The magnetic head (10) according to any one of claims 1 to 5, wherein each read-write area (3) comprises a plurality of access heads, the access head is a write head (311) or a read head (312), and k access heads in different read-write areas (3) are connected through a common analog switch (4) to a circuit of a tape drive in which the k access heads are located; and
the analog switch (4) is configured to: connect a circuit in which a part of the k access heads are located, and disconnect a circuit in which a remaining part of the access heads are located, wherein k is greater than or equal to 2, and is less than or equal to a quantity of the read-write areas (3).

7. The magnetic head (10) according to any one of claims 1 to 6, wherein two adjacent read-write areas (3) are spaced apart from each other, and the spacing matches a width of one or more data bands of the magnetic tape (20).

8. The magnetic head (10) according to claim 7, wherein there are two read-write areas (3);
if the magnetic tape (20) has 2n data bands, the spacing matches a width of (n-1) data bands of the magnetic tape (20); and
if the magnetic tape (20) has (2n-1) data bands, the spacing matches a width of (n-2) or (n-1) data bands of the magnetic tape (20), wherein n is an integer greater than or equal to 2.

9. A tape drive, wherein the tape drive comprises the magnetic head (10) according to any one of claims 1 to 8, and further comprises a motor that drives the magnetic head (10) to move.

10. The tape drive according to claim 9, wherein the tape drive further comprises a magnetic tape (20); and
the magnetic tape (20) is fixedly installed in the tape drive, and the magnetic tape (20) is a magnetic medium configured to provide data storage.

11. A magnetic tape storage rack, wherein the magnetic tape storage rack comprises a rack, a controller, and the tape drive according to claim 9 or 10, and both the controller and the tape drive are located in the rack; and
the controller is configured to: receive an access request from a user, and perform data access on a magnetic tape (20) in the tape drive based on the access request, wherein the data access comprises data reading and data writing.
